# EUROPEAN PATENT SPECIFICATION

(11) **EP 3 835 817 B1**
(45) Date of publication and mention of the grant of the patent: **07.08.2024**
(21) Application number: 21150154.9
(22) Date of filing: 14.05.2019
(51) Int. Cl.: G01S 7/481, G01S 17/42, G01S 17/89

(54) **3D SCANNING LIDAR SENSOR**
3D SCANNING LIDAR SENSOR
CAPTEUR LIDAR DE BALAYAGE 3D

(30) Priority: 16.05.2018 KR 20180055952; 15.02.2019 KR 20190018126; 15.02.2019 KR 20190018127
(43) Date of publication of application: 16.06.2021
(62) Divisional of application: 19174303.8
(73) Proprietor: Miele & Cie. KG, 33332 Gütersloh (DE); Yujin Robot Co., Ltd., Incheon, 22013 (KR)
(72) Inventor: Shin, Kyung Chul, Seoul 03010 (KR); Park, Seong Ju, Gyeonggi-do 15820 (KR); Lee, Jae Young, Gyeonggi-do 15804 (KR); Cheon, Moo Woong, Gyeonggi-do 13903 (KR); Kim, Man Yeol, Incheon 21931 (KR)
(74) Representative: Ellerbrächter, Dirk

(56) References cited:
- US-B2- 6 879 384

## Description

### [Technical Field]

The present invention relates to a LIght Detection And Ranging (LIDAR) sensor which scans a three-dimensional space.

### [Background Art]

Contents described herein simply provide background information for the present exemplary embodiment, but do not configure the related art.

A three-dimensional (3D) distance measuring system measures a distance of a space by using various sensors, such as a Charge Coupled Device (CCD) image sensor, a Complementary Metal Oxide Semiconductor (CMOS) image sensor, an ultrasonic sensor, and a laser sensor.

A general 3D distance measuring system scans a space by rotating a two-dimensional (2D) distance sensor that scans a plane surface including a center of the sensor. A device using the 2D distance sensor is not limited in cost, a size, and a sampling rate, so that there is a limit in that the 2D distance sensor is produced as a commercially used product, not a product for purpose of study.

A device to which a 2D photodiode array is applied measures a distance by using structure light or time of flight. A method of using the structure light is a method of measuring a depth by projecting a unique pattern, detecting a corresponding point, and calculating a depth, and a method of using time of flight is a method of measuring a time difference or a phase difference and converting the measured time difference or phase difference into a distance. In the device to which a 2D photodiode array is applied, it is difficult to increase a view angle and each pixel has lots of 3D information, so that there is a problem in that it is difficult to measure a pin point.

A distance measuring device to which a one-dimensional photodiode array is applied includes a photodiode array and a laser diode array (or a laser diode and a diffuser). The photodiode array has a structure in which several hundreds or several thousands of photodiodes are arranged on silicon crystal in a straight line. In the distance measuring device to which a one-dimensional photodiode array is applied, it is difficult to increase a view angle, and modules, such as a diffuser having high efficiency, a sensor array, and a mems mirror, required for the implementation are expensive, so that there is a problem in that it is difficult to manufacture the distance measuring device as a commercially available product.

For an easy implementation, an existing LIght Detection And Ranging (LIDAR) sensor adopts a specific tube for a transmitter or is implemented in a structure for securing a long distance from the transmitter and a receiver to a mirror. The existing 2D LIDAR sensor has a laser optical tube formed from an emitter to a mirror, and the existing 3D LIDAR sensor adopts a beam adjusting method using a multi-mirror forming a long distance through a specific tube or generating a long distance in a limited region.

The existing LIDAR sensor has excellent performance, but has a problem in cost and a size. The existing 3D LIDAR sensor requires a plurality of mirrors having high reflectivity in order to form an efficient beam path, so that the existing 3D LIDAR sensor is expensive. A micro LIDAR has a size limitation, so that an existing tube or long distance method cannot be applied to the micro LIDAR.

US 6 879 384 B2 discloses an opto-electronic range finder based which operates based on a time of flight method. The position of a first angle-adjusting unit is detected with an encoder.

### [Summary of The Invention]

The present invention is defined in the appended independent and dependent claims.

The present invention has been made in an effort to minimize a size of a LIght Detection And Ranging (LIDAR) sensor which is capable of performing 3D scanning by removing scattering light by separating a transmitter module and a receiver module, disposing a transmitter, a mirror, and a receiver in a specific space so that light emitted from a light source or light reflected from a transmission mirror is reflected from a first reflection region of a moving mirror and is moved to a target object and light reflected from the target object is reflected from a second reflection region of the moving mirror and is moved to the transmission mirror or a photodiode, installing a blocking wall separating movement paths of light, and restricting a range of a movement of the moving mirror connected to a second gear that is engaged with a first gear connected to a motor and moves.

The present invention has also been made in an effort to set a region of interest for obtaining point cloud data by a LIDAR sensor which is capable of performing 3D scanning by removing scattering light by separating a transmitter module and a receiver module, disposing a transmitter, a mirror, and a receiver in a specific space so that light emitted from a light source or light reflected from a transmission mirror is reflected from a first reflection region of a moving mirror and is moved to a target object and light reflected from the target object is reflected from a second reflection region of the moving mirror and is moved to the transmission mirror or a photodiode, installing a blocking wall separating movement paths of light, and restricting a range of a movement of the moving mirror.

Other non-specified objects of the present invention may be additionally considered within a range easily derivable on the basis of the detailed description and the effect thereof below.

An exemplary embodiment of the present invention provides an optical transceiver, including: a first angle adjusting unit having a first reflection region and a second reflection region; an optical transmitter configured to transmit light to the first reflection region of the first angle adjusting unit; an optical receiver configured to receive light from the second reflection region of the first angle adjusting unit; a first light blocking member configured to separate a movement path of the transmitted light and a movement path of the received light; and a controller configured to transmit a signal controlling an operation of the first angle adjusting unit to the first angle adjusting unit, in which the first angle adjusting unit includes: a reflector having the first reflection region and the second reflection region; a first driving unit configured to transfer power to the reflector; a first gear connected to the first driving unit; and a second gear connected to the reflector and moving while being engaged with the first gear.

The reflector may include a first reflector having the first reflection region and a second reflector having the second reflection region, and the first reflector and the second reflector may be located in a first space and a second space which are separated by the first light blocking member.

The first angle adjusting unit may change an inclination of a normal line of the first reflection region and an inclination of a normal line of the second reflection region, the first angle adjusting unit may synchronize the normal line of the first reflection region and the normal line of the second reflection region, and may make a direction of the normal line of the first reflection region and a direction of the normal line of the second reflection region be parallel.

The number of sawteeth of the first gear and the number of sawteeth of the second gear may be set to M and N (herein, M and N are natural numbers), so that a movement speed of the reflector may be adjusted according to a rotation speed of the first driving unit.

The first driving unit may rotate in a first direction or a second direction, the first gear connected to the first driving unit may rotate in the first direction or the second direction, the second gear engaged with the first gear may rotate in the first direction or the second direction within a range of a first gear angle set by the controller, and the reflector connected to the second gear may move within a range of a predetermined second gear angle.

The second gear may include a hole shaped like an arc, and a stopper installed in a frame of the optical transceiver may be formed to cross the arc-shaped hole.

The optical transceiver may include an elastic body which is connected to the first gear or the second gear and is installed in a frame of the optical transceiver, and the elastic body may be relaxed or contracted to decrease backlash between the first gear and the second gear.

The optical transceiver may further include a second angle adjusting unit, in which the second angle adjusting unit may include: a rotating body, to which the first angle adjusting unit is attached and which rotates; a second driving unit connected to the rotating body to rotate the rotating body; and a rotating body connecting unit configured to connect a base and the rotating body of the optical transceiver.

The rotating body connecting unit may include a data communication unit which is wirelessly connected with the rotating body inside the rotating body and transmits data, and a second light blocking member may be installed in the data communication unit so that data wirelessly transmitted from the data communication unit does not interfere with light of the light transmitter or light of the light receiver.

The rotating body connecting unit may include a power transfer unit which wirelessly transfers power by using a first coil and a second coil inside the rotating body, and the first coil connected to the base of the optical transceiver and the second coil connected to the rotating body may be isolated from a metal part by a third light blocking member.

The first angle adjusting unit may include a location sensor installed in a frame of the optical transceiver, and the location sensor may transceive light with a location indicator attached to the reflector and detect whether the reflector is located at a predetermined location in a state where the second gear is rotated.

The location sensor may include a first location sensor and a second location sensor installed in a frame of the optical transceiver, and the location indicator may include a first location indicator and a second location indicator installed in the reflector.

The first location sensor may transceive light with the first location indicator, and detect whether the reflector is located at a predetermined first location in a state where the second gear is rotated in a first direction.

The second location sensor may transceive light with the second location indicator, and detect whether the reflector is located at a predetermined second location in a state where the second gear is rotated in a second direction.

When the optical transceiver is changed from a scan mode to a correction mode, the optical transceiver may measure a first location of the reflector based on the first location indicator by rotating the reflector in the first direction and the controller may store a first reference location of the first driving unit corresponding to the first location.

When the optical transceiver is changed from a scan mode to a correction mode, the optical transceiver may measure a second location of the reflector based on the second location indicator by rotating the reflector in the second direction and the controller may store a second reference location of the first driving unit corresponding to the second location.

The controller may correct the first reference location and the second reference location.

A fourth light blocking member may be installed in the location sensor so that light transceived by the location sensor does not interfere with light of the optical transmitter or light of the optical receiver.

The controller may transmit a signal controlling an operation of the first angle adjusting unit to the first angle adjusting unit or transmit a signal controlling an operation of the second angle adjusting unit to the second angle adjusting unit.

The controller may acquire point cloud data according to a time flow in a scan mode, and set a region of interest for acquiring the point cloud data by adjusting a movement range of the first angle adjusting unit.

A scan available region may be determined according to a range of a first angle of the reflector included in the first angle adjusting unit and a range of a second angle of the rotating body included in the second angle adjusting unit.

The controller may set a region of interest corresponding to a part of the scan available region by adjusting the range of the first angle.

The controller may change a first angle of the reflector included in the first angle adjusting unit.

The controller may change the scan mode to (i) a normal scan mode, (ii) a concentration scan mode, (iii) a skip scan mode, (iv) a progressive scan mode, (v) an interlaced scan mode, or a combination thereof and adjust density and/or a path of the point cloud data acquired by the optical transceiver.

In the normal scan mode, the optical transceiver may acquire the point cloud data by performing line-scanning at every reference angle interval.

In the concentration scan mode, the optical transceiver may acquire the point cloud data at every angle interval narrower than a reference angle interval.

In the skip scan mode, the optical transceiver may acquire the point cloud data at every angle interval wider than the reference angle interval or by skipping a specific angle range.

In the progressive scan mode, the optical transceiver may acquire the point cloud data by sequentially line-scanning a plurality of lines.

In the progressive scan mode, when N lines (N is a natural number) are scanned in the region of interest, a direction of the first angle of a movement of the reflector may be maintained by sequentially increasing a line from the first line to the last line.

In the interlaced scan mode, the optical transceiver may acquire the point cloud data by scanning an intermediate line between the scanned lines.

In the interlaced scan mode, when N lines (N is a natural number) are scanned in the region of interest, the optical transceiver includes a section in which a direction of the first angle of a movement of the reflector is switched by scanning the K^{th} line that is before the N^{th} line, scanning the L^{th} line that is after the K^{th} line, and scanning the M^{th} line that is before the L^{th} line, and may be operated in a scheme of intermittently skipping a line and scanning a line which has not been scanned to fill the line.

In the interlaced scan mode, the controller may set a line which is line-scanned by the optical transceiver in the region of interest to B × P + Q, P may be a line scan interval at t, B may be a positive sign or a negative sign, and Q may be a line that is line-scanned at t-1, P may include a value set to be larger or smaller than the interval at which the line scanning is performed at t-1 under a predetermined condition, and B may be changed from a positive sign to a negative sign or a negative sign to a positive sign at specific t under a predetermined condition.

Another exemplary embodiment of the present invention provides a device for measuring a distance, the device including: an optical transceiver configured to emit light to the target object by a start control signal, receive light reflected from the target object, and convert the received light into an electric signal; and a distance measuring unit configured to convert the electric signal to generate a stop control signal, and calculate a time of flight based on a time difference between the start control signal and the stop control signal, and measure a distance, in which the optical transceiver includes: a first angle adjusting unit having a first reflection region and a second reflection region; an optical transmitter configured to transmit light to the first reflection region of the first angle adjusting unit; an optical receiver configured to receive light from the second reflection region of the first angle adjusting unit; a first light blocking member configured to separate a movement path of the transmitted light and a movement path of the received light; and a controller configured to transmit a signal controlling an operation of the first angle adjusting unit to the first angle adjusting unit, and the first angle adjusting unit includes: a reflector having the first reflection region and the second reflection region; a first driving unit configured to transfer power to the reflector; a first gear connected to the first driving unit; and a second gear connected to the reflector and moving while being engaged with the first gear.

Another exemplary embodiment of the present invention provides a moving object including: a distance measuring device configured to calculate a time of flight between the moving object and a target object and measure a distance to the target object; and a moving device configured to move the moving object based on the distance to the target object, in which the distance measuring device includes: an optical transceiver configured to emit light to the target object by a start control signal, receive light reflected from the target object, and convert the received light into an electric signal; and a distance measuring unit configured to convert the electric signal to generate a stop control signal, and calculate a time of flight based on a time difference between the start control signal and the stop control signal, and measure a distance, the optical transceiver includes: a first angle adjusting unit having a first reflection region and a second reflection region; an optical transmitter configured to transmit light to the first reflection region of the first angle adjusting unit; an optical receiver configured to receive light from the second reflection region of the first angle adjusting unit; a first light blocking member configured to separate a movement path of the transmitted light and a movement path of the received light; and a controller configured to transmit a signal controlling an operation of the first angle adjusting unit to the first angle adjusting unit, and the first angle adjusting unit includes: a reflector having the first reflection region and the second reflection region; a first driving unit configured to transfer power to the reflector; a first gear connected to the first driving unit; and a second gear connected to the reflector and moving while being engaged with the first gear.

Another exemplary embodiment of the present invention provides a device for measuring a distance, including: an optical transceiver configured to emit light to the target object by a start control signal, receive light reflected from the target object, and convert the received light into an electric signal; and a distance measuring unit configured to convert the electric signal to generate a stop control signal, and calculate a time of flight based on a time difference between the start control signal and the stop control signal, and measure a distance, in which the optical transceiver includes: a first angle adjusting unit which has a first reflection region and a second reflection region and moves in a first direction or a second direction; an optical transmitter configured to transmit light to the first reflection region of the first angle adjusting unit; an optical receiver configured to receive light from the second reflection region of the first angle adjusting unit; a first light blocking member configured to separate a movement path of the transmitted light and a movement path of the received light; a second angle adjusting unit configured to move the first angle adjusting unit in a third direction or a fourth direction; and a controller configured to transmit a signal controlling an operation of the first angle adjusting unit to the first angle adjusting unit or transmit a signal controlling an operation of the second angle adjusting unit to the second angle adjusting unit, and the controller acquires point cloud data according to a time flow in a scan mode, and sets a region of interest for acquiring the point cloud data by adjusting a movement range of the first angle adjusting unit.

Another exemplary embodiment of the present invention provides an optical transceiver including: a first angle adjusting unit which has a first reflection region and a second reflection region and moves in a first direction or a second direction; an optical transmitter configured to transmit light to the first reflection region of the first angle adjusting unit; an optical receiver configured to receive light from the second reflection region of the first angle adjusting unit; a first light blocking member configured to separate a movement path of the transmitted light and a movement path of the received light; a second angle adjusting unit configured to move the first angle adjusting unit in a third direction or a fourth direction; and a controller configured to transmit a signal controlling an operation of the first angle adjusting unit to the first angle adjusting unit or transmit a signal controlling an operation of the second angle adjusting unit to the second angle adjusting unit, and the controller acquires point cloud data according to a time flow in a scan mode, and sets a region of interest for acquiring the point cloud data by adjusting a movement range of the first angle adjusting unit.

Another exemplary embodiment of the present invention provides a moving object including: a distance measuring device configured to calculate a time of flight between the moving object and a target object and measure a distance to the target object; and a moving device configured to move the moving object based on the distance to the target object, in which the distance measuring device includes: an optical transceiver configured to emit light to the target object by a start control signal, receive light reflected from the target object, and convert the received light into an electric signal; and a distance measuring unit configured to convert the electric signal to generate a stop control signal, and calculate a time of flight based on a time difference between the start control signal and the stop control signal, and measure a distance, the optical transceiver includes: a first angle adjusting unit having a first reflection region and a second reflection region and moving in a first direction or a second direction; an optical transmitter configured to transmit light to the first reflection region of the first angle adjusting unit; an optical receiver configured to receive light from the second reflection region of the first angle adjusting unit; a first light blocking member configured to separate a movement path of the transmitted light and a movement path of the received light; the second angle adjusting unit configured to move the first angle adjusting unit in a third direction or a fourth direction; and a controller configured to transmit a signal controlling an operation of the first angle adjusting unit to the first angle adjusting unit or transmit a signal controlling an operation of the second angle adjusting unit to the second angle adjusting unit, and the controller acquires point cloud data according to a time flow in a scan mode, and sets a region of interest for acquiring the point cloud data by adjusting a movement range of the first angle adjusting unit.

As described above, according to the exemplary embodiments of the present invention, it is possible to remove scattering light and minimize a size of a 3D scanning LIDAR sensor by separating a transmitter module and a receiver module, disposing a transmitter, a mirror, and a receiver in a specific space so that light emitted from a light source or light reflected from a transmission mirror is reflected from a first reflection region of a moving mirror and is moved to a target object and light reflected from the target object is reflected from a second reflection region of the moving mirror and is moved to the transmission mirror or a photodiode, installing a blocking wall separating movement paths of light, and restricting a range of a movement of the moving mirror connected to a second gear that is engaged with a first gear connected to a motor and moves.

According to the exemplary embodiments of the present invention, it is possible to remove scattering light and set a region of interest for obtaining point cloud data by a LIDAR sensor which is capable of performing 3D scanning by separating a transmitter module and a receiver module, disposing a transmitter, a mirror, and a receiver in a specific space so that light emitted from a light source or light reflected from a transmission mirror is reflected from a first reflection region of a moving mirror and is moved to a target object and light reflected from the target object is reflected from a second reflection region of the moving mirror and is moved to the transmission mirror or a photodiode, installing a blocking wall separating movement paths of light, and restricting a range of a movement of the moving mirror.

Although not explicitly stated herein, the effects described in the specification below expected by the technical characteristics of the present invention and the provisional effects thereof are treated as the effects described in the specification of the present invention.

The foregoing summary is illustrative only and is not intended to be in any way limiting. In addition to the illustrative aspects, embodiments, and features described above, further aspects, embodiments, and features will become apparent by reference to the drawings and the following detailed description.

### [Brief Description of Drawings]

FIG. 1 is a block diagram illustrating an example of a moving object according to an exemplary embodiment of the present invention.
FIG. 2 is a diagram illustrating an example of a moving object according to an exemplary embodiment of the present invention.
FIG. 3 is a block diagram illustrating an example of a distance measuring device according to another exemplary embodiment of the present invention.
FIG. 4 is a diagram illustrating an example of an echo phenomenon according to a disposition of an optical transmitter, a mirror, and an optical receiver.
FIG. 5 is a block diagram illustrating an example of an optical transceiver according to other exemplary embodiments of the present invention.
FIG. 6 is a block diagram illustrating an example of an optical transmitter of the optical transceiver according to other exemplary embodiments of the present invention.
FIG. 7 is a block diagram illustrating an example of an optical receiver of the optical transceiver according to other exemplary embodiments of the present invention.
FIG. 8 is a block diagram illustrating an example of a first angle adjusting unit of the optical transceiver according to other exemplary embodiments of the present invention.
FIGS. 9 to 11 are diagrams illustrating the example of the optical transceiver according to other exemplary embodiments of the present invention.
FIGS. 12 to 14 are diagrams illustrating an example of the first angle adjusting unit of the optical transceiver according to other exemplary embodiments of the present invention.
FIG. 15 is a block diagram illustrating the example of the first angle adjusting unit of the optical transceiver according to another exemplary embodiment of the present invention.
FIG. 16 is a block diagram illustrating an example of a location sensor and a location indicator of the optical transceiver according to another exemplary embodiment of the present invention.
FIGS. 17 to 19 are diagrams illustrating the example of the location sensor and the location indicator of the optical transceiver according to other exemplary embodiments of the present invention.
FIG. 20 is a diagram illustrating an example of a transmission path of the optical transceiver according to other exemplary embodiments of the present invention.
FIG. 21 is a diagram illustrating an example of a reception path of the optical transceiver according to other exemplary embodiments of the present invention.
FIGS. 23 to 25 are diagrams illustrating an example of a second angle adjusting unit of the optical transceiver according to other exemplary embodiments of the present invention.
FIGS. 26 and 27 are flowcharts illustrating an example of an operation of the optical transceiver according to other exemplary embodiments of the present invention.
FIGS. 28 to 30 are diagrams illustrating an example of point cloud data obtained by the optical transceiver according to other exemplary embodiments of the present invention.

It should be understood that the appended drawings are not necessarily to scale, presenting a somewhat simplified representation of various features illustrative of the basic principles of the invention. The specific design features of the present invention as disclosed herein, including, for example, specific dimensions, orientations, locations, and shapes will be determined in part by the particular intended application and use environment.

In the figures, reference numbers refer to the same or equivalent parts of the present invention throughout the several figures of the drawing.

### [Detailed Description]

Hereinafter, in the description of the present invention, known functions combined herein are obvious to those skilled in the art and a detailed description of the known functions will be omitted to avoid making the subject matter of the present invention unclear, and some exemplary embodiments of the present invention will be described in detail with reference to the illustrative drawings.

A LIght Detection And Ranging (LIDAR) sensor according to the present exemplary embodiment may be applied to a distance measuring device or a moving object. That is, the LIDAR sensor may be applied to a product requiring a measurement of a distance in small home appliance, or a moving object, such as a drone and a vehicle. The LIDAR sensor is a device which shoots a laser signal and measures a return time of a reflected light signal, and measures a distance of a reflector by using a speed of light. A laser signal is changed to an electric signal through a photodiode. The laser signal may have a predetermined wavelength band. The LIDAR sensor may be called an optical transceiver.

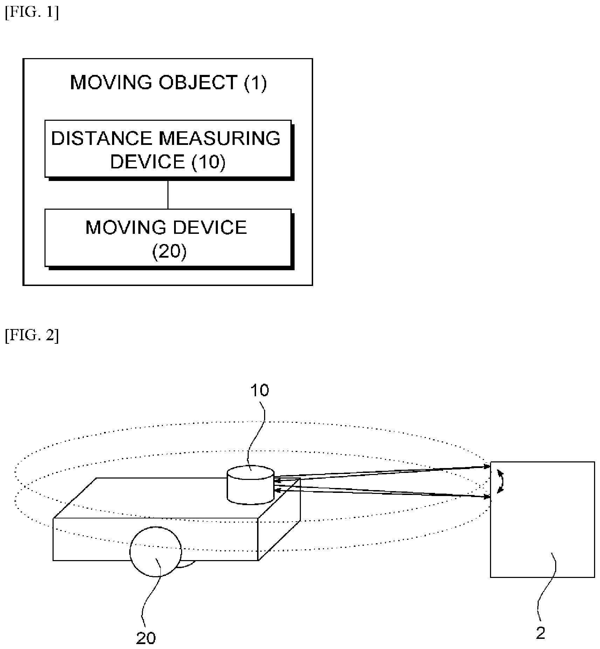

FIG. 1 is a block diagram illustrating an example of a moving object according to an exemplary embodiment of the present invention.

As illustrated in FIG. 1, a moving object 1 includes a distance measuring device 10 and a moving device 20. In the moving object 1, some of the various constituent elements illustrated in FIG. 1 may be omitted or other constituent elements may be additionally included. For example, the moving object may additionally include a cleaning unit.

The moving object 1 means a device designed to be movable from a specific location to another location according to a predefined scheme, and may move from a specific location to another location by using a moving means, such as a wheel, a rail, a leg for walk, a wing, and a multirotor. The moving object 1 may collect external information by using a sensor and the like and then move according to the collected information, and may move by using a separate manipulation means by a user. Examples of the moving object 1 may include a robot vacuum cleaner, a toy car, and a moving robot usable for industry or military purposes.

A robot vacuum cleaner is a device which sucks foreign substances, such as dust, piled on a floor while travelling a to-be-cleaned space to automatically clean the to-be-cleaned space. Unlike a general vacuum cleaner that moves by external force of a user, the robot vacuum cleaner cleans a to-be-cleaned space while moving by using external information or a predefined movement pattern.

The robot vacuum cleaner may automatically move by using a predefined pattern, detect an external obstacle by a detecting sensor and then move according to the detection, and move according to a signal transmitted from a remote control device manipulated by a user.

The detecting sensor may be implemented by the LIDAR. The LIDAR is a device which shoots a laser signal and measures a return time and intensity of the reflected laser signal, and measures a distance of a reflector by using a speed of light. A laser signal is changed to an electric signal through a photodiode. The laser signal may have a predetermined wavelength band.

FIG. 2 is a diagram illustrating an example of the moving object according to the exemplary embodiment of the present invention.

Referring to FIG. 2, the distance measuring device 10 measuring a distance to a target object by calculating a time of flight between a moving object and the target object is located at an upper end portion of a main body, but this is simply an example, and the present invention is not limited thereto, and one or more distance measuring devices may be implemented at appropriate locations according to an implemented design.

The distance measuring device 10 transceives light by using a pair of light sources and a photodiode, and 3D scans a surrounding area by using a movable mirror and a rotating body.

The distance measuring device 10 may operate by a Time Of Flight (TOF) scheme. The TOF scheme is a scheme in which a laser emits a pulse or a square wave signal and an arrival time of a reflection pulse or square wave signals from the objects located within a measurement range to a receiver is measured to measure a distance between a measurement target and the distance measuring device.

The moving device 20 moves a moving object by calculating a travelling path based on a distance to a target object or detecting an obstacle. The moving device 20 may move a moving object based on a relative location of an artificial mark.

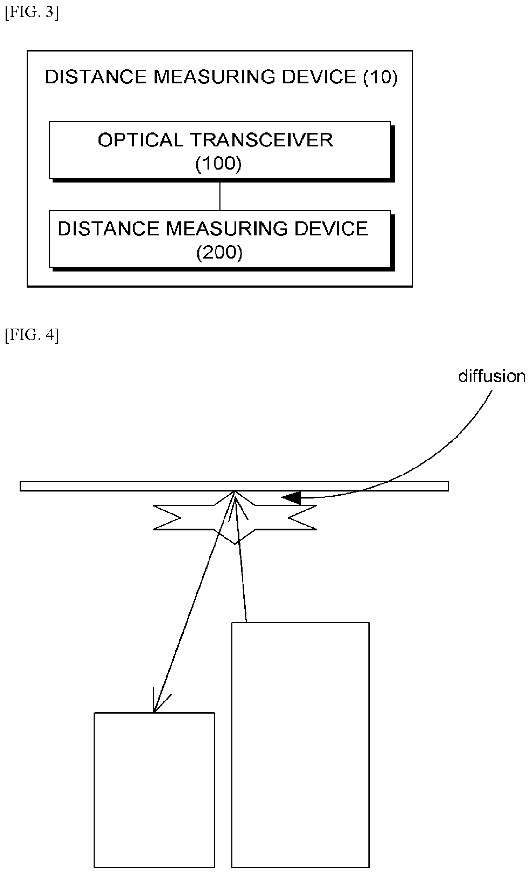

Hereinafter, the distance measuring device which is implemented in a moving object or is independently operated will be described with reference to FIG. 3.

FIG. 3 is a block diagram illustrating an example of the distance measuring device. As illustrated in FIG. 3, the distance measuring device 10 includes an optical transceiver 100 and a distance measuring unit 200. In the distance measuring device 10, some of the various constituent elements illustrated in FIG. 3 may be omitted or other constituent elements may be additionally included. For example, the distance measuring device 10 may additionally include an interface.

The optical transceiver 100 transmits a laser signal and receives a reflected signal. The optical transceiver 100 emits light to a target object by a start control signal, and receives light reflected from the target object and converts the received light to an electric signal. The optical transceiver 100 outputs the electric signal for a predetermined detection time.

The optical transceiver 100 converts light into a current or a voltage, and requires a circuit for buffering and scaling an output of a photodiode. For example, a Trans Impedance Amplifier (TIA) may be connected to the photodiode. The TIA amplifies a current of the photodiode, converts the amplified current into a voltage, and outputs the voltage. The TIA may be divided into a Resistive Feedback TIA (R-TIA) and a Capacitive Feedback TIA (C-TIA).

The optical transceiver 100 may include a signal converter. The signal converter may be connected to the photodiode of the optical transceiver 100, and the TIA may be connected to the signal converter.

A light source emits light to a target object based on a predetermined sampling period. The sampling period may be set by a controller of the distance measuring device 10. The sampling period is a time for which the optical transceiver 100 emits light according to a start control signal, receives reflected light, and converts the light into an electric signal. The optical transceiver 100 may repeatedly perform the operations in a next sampling period.

The photodiode receives the light reflected from the target object and converts the light into an electric signal. The photodiode may be implemented with a PN junction photodiode, a PIN photodiode, an Avalanche Photo Diode (APD), and the like. The photodiode outputs an electric signal until an optical carrier fades. Further, as a size of an output signal is increased, a time taken for fading of the signal is increased.

The signal converter outputs the electric signal for a detection time in the sampling period so as not to be limited by a fading time of the output signal. The signal converter may include a resistor, a switch, and a capacitor.

The resistor is connected to the photodiode. One end of the resistor is connected to the photodiode, and the other end of the resistor is connected to a ground. The resistor may be connected to an anode or a cathode of the photodiode.

When a resistance value is small, a waveform has a value not 0 for a similar time to a time for which light passes through the photodiode, but there is a problem in that a size of the output signal is small. Accordingly, it is necessary to amplify a size of the electric signal by using a resistor having a larger value than a value predetermined for the resistor. In this case, a dragging phenomenon of the signal is generated.

In order to solve the dragging phenomenon of the signal, a transmission path of the electric signal is changed through a switch. The optical transceiver 100 may output a signal, of which a part of a region in which a size of the electric signal is decreased is removed. Even though an end of the electric signal is removed, the distance measuring device 10 may measure a distance. The reason is that a signal determiner does not detect an end point of the electric signal, but detects a start time point and a time point of a maximum size of the electric signal and outputs a rising edge and a falling edge.

The switch is connected to the resistor in parallel and changes a transmission path of an electric signal. For example, the switch may be implemented with a transistor and the like.

The switch transmits (i) an electric signal for a detection time (Td) in the sampling period (Tₛ) through a first path and (ii) an electric signal for an interruption time (T_{c}) in the sampling period (Tₛ) through a second path. The first path is a path through which the signal is transmitted through a capacitor, and the second path is a path through which the signal is transmitted to the group through the switch.

Even though signal fading times (T1, T2, and T3) of the electric signal output from the photodiode 140 are taken by the dragging phenomenon, the distance measuring device 10 may process the signal according to the sampling period without a need to stand by until the signal fades.

The distance measuring device 10 adjusts the sampling period, calculates and sets an appropriate detection time according to the sampling period, and controls an on/off operation of the switch 152. The controller of the distance measuring device 10 may control the on/off operation of the switch with reference to a sampling period, a detection time, an interruption time, a waveform of an emitted light, an interval between on and off time of the light source, a pulse width of the start control signal, a pulse width of a stop control signal, a rotation speed of the optical transceiver, a signal processing and standby time of the signal determiner and a time calculator, and the like.

The capacitor is connected to a point connected with the photodiode and the resistor and outputs an electric signal. The capacitor serves to remove a DC component of the electric signal. A non-inverting amplifier circuit may be connected to an end of the capacitor.

The distance measuring unit 200 may include one or more signal determiners which convert an electric signal and measure an accurate time point, and output a stop control signal.

The distance measuring unit 200 converts the electric signal so that a signal point having a maximum signal size has a predetermined size by using the signal determiner, adjusts a size of the converted electric signal, and detects a time point at which the electric signal has the predetermined size. The signal determiner converts the electric signal and generates a stop control signal.

The signal determiner receives the electric signal from the photodiode or the TIA. The received electric signal, that is, the input signal, has the form rising and falling by the reflected light. The signal determiner accurately measures a target time point for the input signal and outputs an electric signal.

The input signal has a front time point (T_{front}), target time points (T₁ and T₂) at which a time point meets a predetermined threshold value, and a peak time point (Tₘₐₓ) according to the form of the input signal. The signal determiner performs two-stage converting processes for detecting a time point closest to the front time point (T_{front}) and the peak time point (Tₘₐₓ). The converted signal has a front time point (T_{front}), rising time points (T_{rising1} and T_{rising2}) at which a time point meets a predetermined threshold value, falling time points (T_{falling1} and T_{falling2}) at which a time point meets a predetermined threshold value, and an end time point (T_{end}). The end time point (T_{end}) is the same time point as the peak time point (Tₘₐₓ) of the signal before the conversion.

The signal determiner differentiates the input signal, or converts the input signal by using a Constant Fraction Discriminator (CFD). The CFD is a scheme of finding a time point, at which a time point at which a delayed signal of an original signal is identical to a signal of which a size is adjusted by a predetermined size ratio is a time point at which the signal has a predetermined ratio with a maximum size.

The signal determiner measures an accurate time point in the rising and falling electric signal and outputs a signal. The signal determiner converts the electric signal, detects a time point at which the electric signal has a predetermined reference size, and generates a stop control signal. When an inclination of the input signal is converted so that a signal point having the maximum signal size has a predetermined size, the rising time points (T_{rising1} and T_{rising2}) become close to the front time point (T_{front}), and the falling time points (T_{falling1} and T_{falling2}) become close to the end time point (T_{end}).

The signal determiner adjusts the size of the converted input signal. The signal determiner amplifies the size of the converted input signal N degrees (N is a natural number). The signal determiner converts the inclination of the signal to be close to vertical through a plurality of amplification processes. Because the inclination is large, it is possible to accurately obtain the time point even though a circuit is simply implemented with a comparator.

The signal determiner converts the input signal so that the signal point having the maximum signal size in the input signal has a predetermined size. For example, the signal determiner converts the input signal so that the size of the signal is zero. The distance measuring unit 200 may detect a time point close to the time point at which the input signal has the maximum size by converting the time point at which the input signal has the maximum size to zero and comparing the size of the signal with a threshold value.

The signal determiner detects at least one time point having a predetermined reference size from the input signal of which the size is adjusted and outputs signals. Herein, the output signal may have two types. For example, the distance measuring unit 200 may output a rising edge and a falling edge.

The distance measuring unit 200 measures a time and a distance by the TOF scheme. The distance measuring unit 200 calculates a time of flight based on a time difference between the start control signal and the stop control signal and measures a distance. The distance measuring unit 200 calculates a distance from the time by using a speed of light.

The distance measuring unit 200 may include one or more time digital converts which converts a difference between two times into a digital value. The input signal of the time digital converter may also have a pulse form of the same signal source, or may also be an edge of another signal source. For example, the distance measuring device 10 may calculate a time difference based on the rising edge or the falling edge of the start control signal and the rising edge or the falling edge of the stop control signal.

The time digital converter may be formed of a time delay element and a flip flop. The time delay element may be implemented with a digital element using an inverter or an analog element using a current source. The time digital converter may adopt various schemes, such as a phase deviation scheme, a scheme using a high-resolution clock, and an equivalent time sampling scheme.

The time digital converter measures a time by using (i) the numbers (N₁ and N₂) counted by a coarse counter and a fine counter and (ii) a large clock of the coarse counter and a small clock of the fine counter. Resolution of the time digital converter is determined by a time difference between a large clock of the coarse counter and a small clock of the fine counter.

The time digital converter includes a slow oscillator generating a large clock and a fast oscillator generating a small clock. A phase detector detects a time point at which the large clock is synchronized with the small clock.

In an existing time digital converter, the slow oscillator and the fast oscillator adjust the number of buffers to adjust clock widths. The existing time digital converter has resolution of about 80 picoseconds (ps) by a signal delay time of a buffer itself.

In the time digital converter, the slow oscillator and the fast oscillator adjust clock widths by changing the positions and the signal paths of gates on the circuit. For example, the slow oscillator and the fast oscillator may be combined with the same gates. The slow oscillator and the fast oscillator of the time digital converter according to the present exemplary embodiment change the positions and the signal paths of the gates, so that the time digital converter has resolution of about 10 picoseconds (ps).

The time digital converter processes the rising edge and the falling edge together, so that the slow oscillator or the fast oscillator may be shared and designed.

The interface is a communication path transceiving information with another device (or a host). Another device may access the distance measuring device 10 through the interface and set a parameter. The distance measuring device 10 may transmit the measured time and distance to another device through the interface.

When the distance measuring device 10 adopts a differential scheme implemented with an RC circuit in the process of converting the inclination of the signal, a frequency characteristic of the signal according to the change in a distance is changed, so that a time error is generated. When the CFD scheme is applied in the process of converting the inclination of the signal, the inclination of the signal is different, so that a charging time of a capacitor of the comparator is different, and a response time of the comparator is changed, so that a time error is generated. Accordingly, the distance measuring device 10 performs a process of correcting the time error.

The distance measuring unit 200 corrects the FOT by using the pulse width of the stop control signal. Since an output signal of a general photodiode has a large change in pulse width, when a pulse width and a work error are one-to-N matched and a region is not close, there is a problem in that it is difficult to use the output signal. In the present exemplary embodiment, the process of converting the signal is performed, so that a relationship between a pulse width and a work error may be simply modeled.

The distance measuring unit 200 models a function between a work error and a pulse width, and measures a correction factor in advance. The distance measuring unit 200 corrects the TOF by applying the correction factor that is in inverse proportion to the pulse width. When a reflected signal is weak, so that the pulse width is decreased, the work error is increased, so that the distance measuring unit 200 sets the correction factor to be large. When the reflected signal is strong, so that the pulse width is increased, the work error is decreased, so that the distance measuring unit 200 sets the correction factor to be small.

The distance measuring unit 200 calculates the pulse width based on the rising edge or the falling edge of the stop control signal, and adds the factor value applied to the function of the work error to the pulse width to the TOF before the correction. The distance measuring device 10 corrects the TOF by using the pulse width of the reflected signal, thereby accurately calculating the TOF.

In order to decrease a size of the LIDAR sensor, all of the components, for example, the transmitter, the mirror, and the receiver, need to be closely integrated. In order to decrease a size of the optical transceiver, a distance from an emitter and the receiver to the mirror needs to be minimized.

FIG. 4 is a diagram illustrating an example of an echo phenomenon according to a disposition of the optical transmitter, the mirror, and the optical receiver. Referring to FIG. 4, when both the optical transmitter and the optical receiver are located at a lower end and the mirror is located at an upper end, there confronts a problem of an echo according to the locations of the components and the optical path in the process of miniaturizing the components. The echo is generated from the diffused or scattered light signal emitted from the mirror. When the laser signal meets the mirror, a weakly diffused or reflected signal is input to the photodiode. The rising edge is delayed due to the weak signal, and the falling edge is changed according to a distance to an actual target object.

In order to miniaturize the LIDAR sensor, a distance between the transceiver and the mirror needs to be minimized. In order to secure a vertical field of view, the mirror moves, and in this case, it is necessary to secure a space in which the mirror moves and it is necessary to interrupt an echo signal. In order to solve the limitation, in the present exemplary embodiment, a blocking wall is installed.

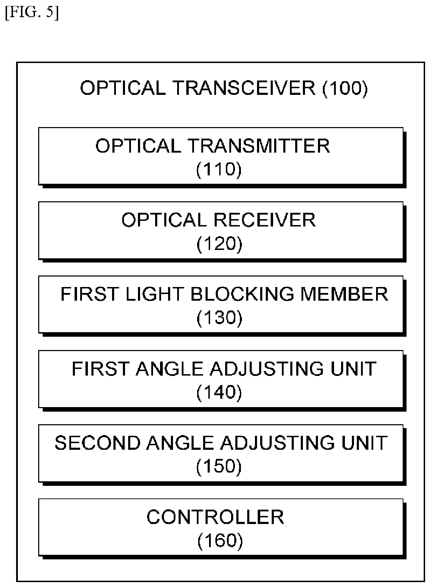

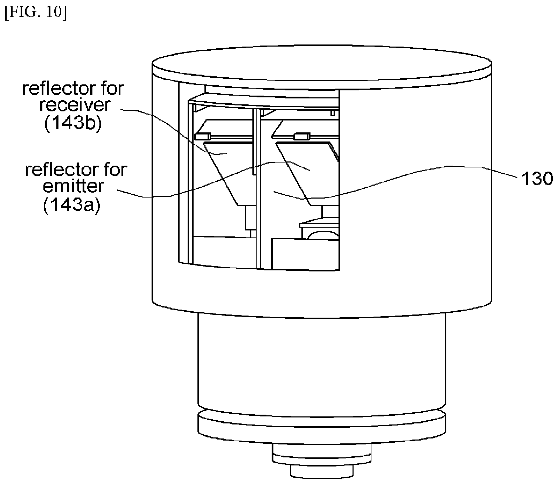

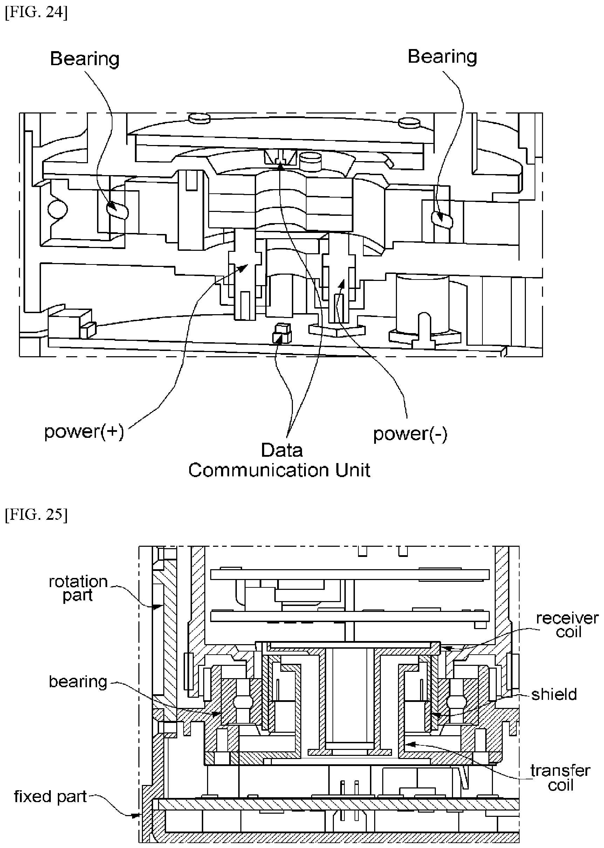

Hereinafter, a structure of the optical transceiver which is capable of performing 3D scanning will be described with reference to FIGS. 5 to 25.

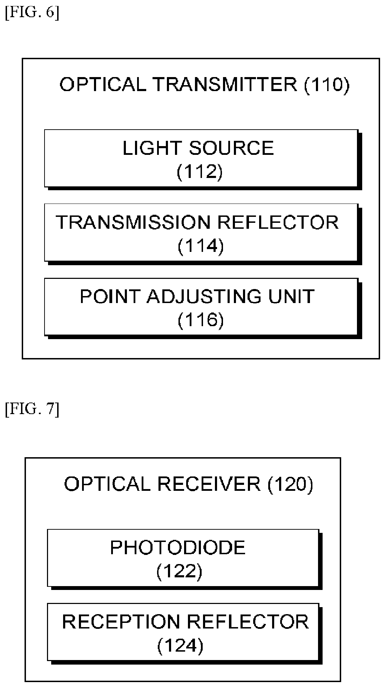

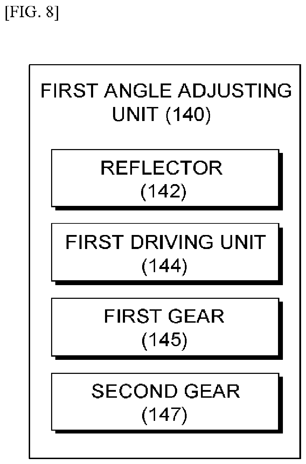

Referring to FIG. 5, the optical transceiver 100 includes an optical transmitter 110, an optical receiver 120, a first light blocking member 130, a first angle adjusting unit 140, a second angle adjusting unit 150, and a controller 160. In the optical transceiver 100, some of the various constituent elements illustrated in FIG. 5 may be omitted or other constituent elements may be additionally included. Referring to FIG. 6, the optical transmitter 110 may include a light source 112 and a transmission reflector 114. Referring to FIG. 7, the optical receiver 120 may include a photodiode 122 and a reception reflector 124. Referring to FIG. 8, the first angle adjusting unit 140 may include a reflector 142, a first driving unit 144, a first gear 145, and a second gear 147.

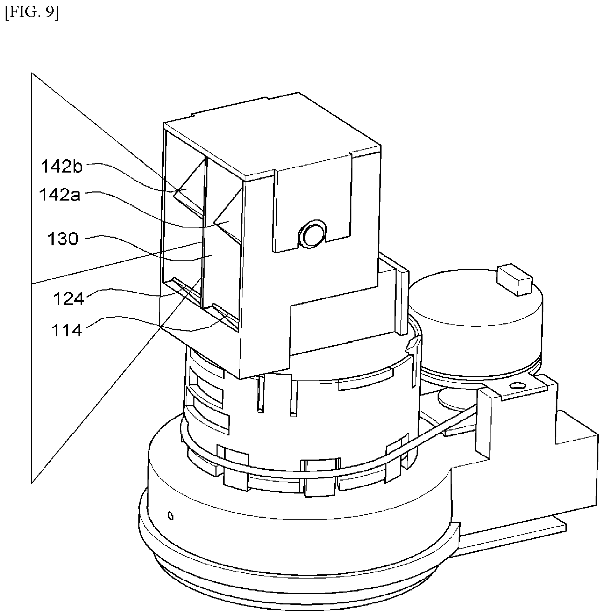

FIGS. 9 to 11 are diagrams illustrating an example of the optical transceiver.

The optical transmitter 110 transmits light to a first reflection region 143a of the first angle adjusting unit 140. The optical receiver 120 receives light from a second reflection region 143b of the first angle adjusting unit 140. The first light blocking member 130 separates a movement path of the transmitted light from a movement path of the received light. The first angle adjusting unit 140 includes the first reflection region 143a and the second reflection region 143b and reflects light, and is fixedly or movably installed.

The light source 112 is a device emitting light, and transmits light to the first reflection region 143a, the transmission reflector 114, and the like. The light source 112 may be implemented with a Laser Diode (LD) and the like. The light source 112 may generate a laser pulse signal in the unit of nanosecond. The laser signal may have a predetermined wavelength band. The light source 112 may be connected with a point adjusting unit which adjusts an emission speed of the light source based on a predetermined sampling period and adjusts the number of elements of point cloud data acquired per unit time. The point adjusting unit may be implemented by the controller 160. For example, the point adjusting unit may set an emission speed of the light source 112 so as to acquire 10 K or 200 K points per second.

The photodiode 122 is a device which receives light reflected from the second reflection region 143b, the reception reflector 124, and the like and converts the received light into an electric signal. A principle that when light of photon energy hits a diode, transferring electrons and positive charges and holes are generated, so that the electrons act may be applied to the photodiode 140. The photodiode 140 may be implemented with a PN junction photodiode, a PIN photodiode, an Avalanche Photo Diode (APD), and the like.

The transmission reflector 114, the reception reflector 124, and the reflector 142 may be implemented with a mirror. Lenses 113 and 123 may be located between the movement paths of light. The optical transceiver 100 may divide or collect light by using the lens and the like or form parallel light. The optical transceiver 100 may include a transmission optical unit and a reception optical unit. The transmission optical unit and the reception optical unit are paths of the laser signal, and may be formed in a tube structure.

The reflector 142 includes the first reflection region 143a and the second reflection region 143b. The first reflection region 143a reflects the light transmitted by the optical transmitter 10 to a target object. The second reflection region 143b reflects the light reflected from the target object to the optical receiver 120. Even though a part of the light transmitted by the optical transmitter 110 is diffused, scattered, or reflected from the first reflection region 143a, the first light blocking member 130 blocks a path through which the diffused, scattered, or reflected light travels to the optical receiver 143b.

The controller 160 transmits a signal controlling an operation of the first angle adjusting unit 140 or transmits a signal controlling an operation of the second angle adjusting unit 150. As a numerical value set for controlling each constituent element of the optical transceiver 100 by the controller 160, an appropriate numerical value may be used according to an implemented design.

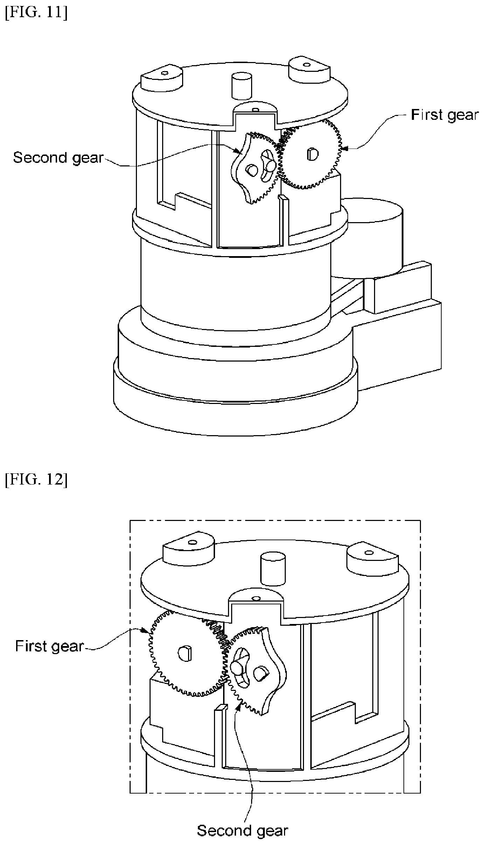

FIGS. 12 to 14 are diagrams illustrating an example of the first angle adjusting unit of the optical transceiver.

The first angle adjusting unit 140 includes the reflector 142 in which the first reflection region 143a and the second reflection region 143b are spatially divided by the first light blocking member 130. The reflector 142 includes a first reflector 142a having the first reflection region 143a and a second reflector 142b having the second reflection region 143b. The first reflector 142a and the second reflector 142b are located in a first space and a second space, which are separated by the first light blocking member 130, respectively.

In the present exemplary embodiment, the transmission path of light and the reception path of light are completely isolated from each other by the first light blocking member 130. That is, a transmitter module and a receiver module are located inside a specific space divided by the first light blocking member 130. Each of the transmitter module and the receiver module may include a mirror. The echo phenomenon is removed by using the first light blocking member, thereby increasing an output of the light source.

The controller 160 changes inclinations of a normal line of the first reflection region and a normal line of the second reflection region, and the controller 160 synchronizes a change in the inclination of the normal line of the first reflection region and a change in the inclination of the normal line of the second reflection region. The controller 160 adjusts a direction of the normal line of the first reflection region and a direction of the normal line of the second reflection region to be parallel.

The first angle adjusting unit 140 includes the first driving unit 144 which transfers power to the reflector 142 of the first angle adjusting unit 140. The first driving unit 144 may be implemented by a general motor, a step motor, and the like. The first driving unit 144 may adjust a rotation direction, a rotation speed, or a rotation acceleration. The first driving unit 144 rotates in a first direction or a second direction. The first direction or the second direction may mean an upper or a lower direction according to a vertical field of view.

The first angle adjusting unit 140 includes the first gear 145 connected to the first driving unit 144. The first angle adjusting unit 140 includes a second gear 147 moving while being engaged with the first gear 145. The second gear 147 is connected to the reflector 142.

The first driving unit 144 rotates in the first direction or the second direction within a range of a first gear angle set by the controller 160. The first gear 145 connected to the first driving unit 144 rotates in the first direction or the second direction. The second gear 147 engaged with the first gear 145 rotates in the first direction or the second direction. The reflector 142 connected to the second gear 147 moves within a range of a predetermined second gear angle.

The range of the first gear angle and the range of the second gear angle are determined according to saw tooth ratios of the first gear 145 and the second gear 147. The number of saw teeth of the first gear 145 and the number of saw teeth of the second gear 147 are set to M and N (herein, M and N are natural numbers), so that a movement speed of the reflector 142 is adjusted according to a rotation speed of the first driving unit 144.

The ranges of the second gear angles of the second gear 147 and the reflector 142 are limited, thereby decreasing a height of the LIDAR sensor. Particularly, it is possible to minimize a volume of the reflector by increasing space disposition efficiency according to the range of the second gear angle. A part of the second gear may be removed according to the range of the second gear angle in which the second gear moves. A shape of a saw tooth portion of the second gear that is not engaged with the first gear may be minimized. That is, the second gear may have a fan shape. Saw teeth are disposed in an arc portion in the fan-shaped second gear.

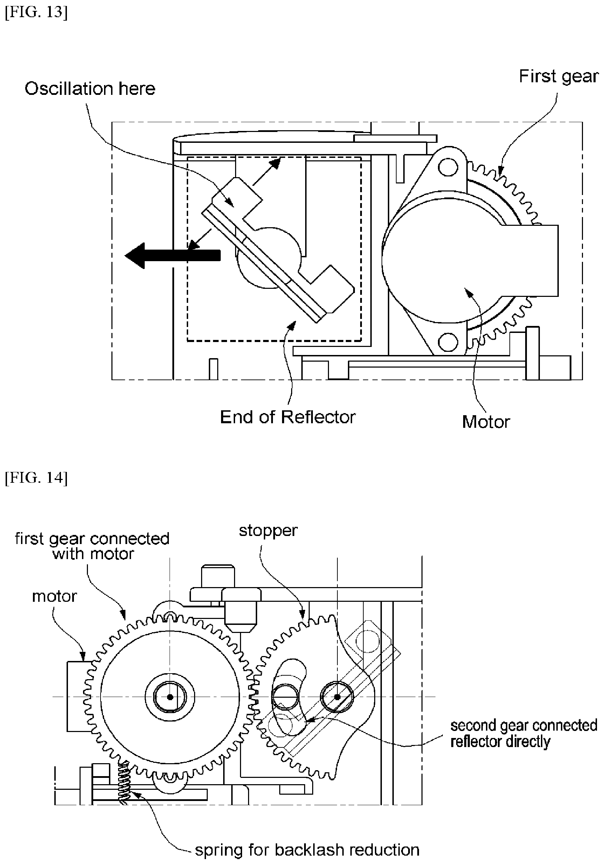

Referring to FIG. 14, the second gear 147 may include a hole shaped like an arc. A stopper installed in a frame of the optical transceiver crosses the arc-shaped hole. The stopper mechanically restricts the movement of the second gear 147. The movement of the second gear is detected by using a location sensor, and the controller adjusts the rotation of the motor, thereby preventing the stopper and the hole from colliding with each other.

The first angle adjusting unit 140 may include an elastic body. The elastic body is connected to the first gear or the second gear, and is installed in the frame of the optical transceiver. The elastic body is relaxed or contracted to decrease backlash between the first gear and the second gear. As the elastic body, a torsion spring, a coil spring, and the like may be used.

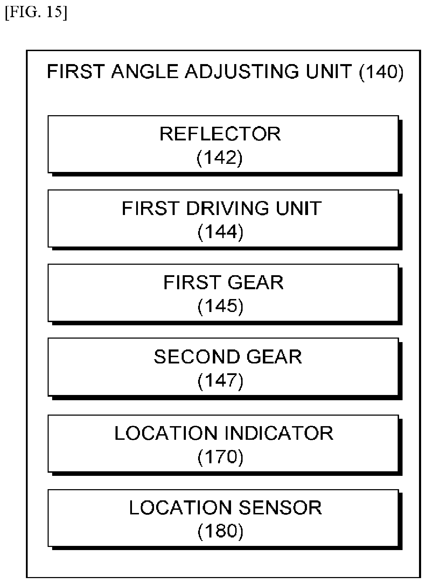

Referring to FIGS. 15 to 19, which best explains the present invention, the first angle adjusting unit 140 may include a location sensor 180 installed in the frame of the optical transceiver. The location sensor 180 transceives light with a location indicator 170 attached to the reflector 142 and detects whether the reflector 142 is located at a predetermined location in the state where the second gear 147 rotates.

The location sensor 180 includes a first location sensor 181 and a second location sensor 182 installed in the frame of the optical transceiver. The location indicator 170 includes a first location indicator 171 and a second location indicator 172 installed in the reflector 142. The location indicator 170 may be attached to a lateral surface of the reflector and implemented with a material reflecting light. The first location indicator 171 and the second location indicator 172 are located at the same distance from a rotation shaft of the second gear.

The first location sensor 181 transceives light with the first location indicator 171 and detects whether the reflector 142 is located at a predetermined first location in the state where the second gear 147 rotates in a first direction. The first location may be a location in the state where the reflector 142 maximally rotates in an upper direction.

During the rotation of the second gear within a limited angle range, the movement path of the light transmitted by the first location sensor and the movement path along which the first location indicator moves cross once, and the movement path of the light transmitted by the first location sensor and the movement path along which the second location indicator moves do not cross. The first location sensor receives the light reflected by the second location indicator to prevent the first location from being confused.

The second location sensor 182 transceives light with the second location indicator 172 and detects whether the reflector 142 is located at a predetermined second location in the state where the second gear 147 rotates in a second direction. The second location may be a location in the state where the reflector 142 maximally rotates in a lower direction.

During the rotation of the second gear within a limited angle range, the movement path of the light transmitted by the second location sensor and the movement path along which the second location indicator moves cross once, and the movement path of the light transmitted by the second location sensor and the movement path along which the first location indicator moves do not cross. The second location sensor receives the light reflected by the first location indicator to prevent the second location from being confused.

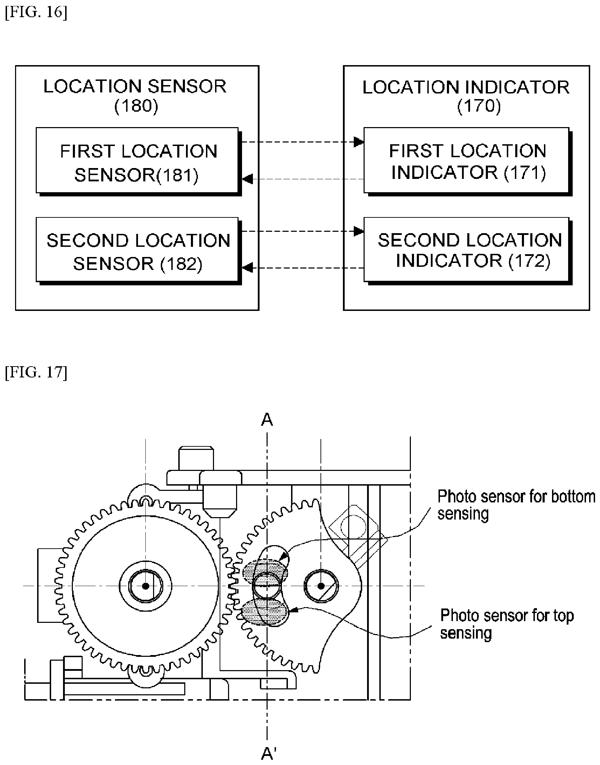

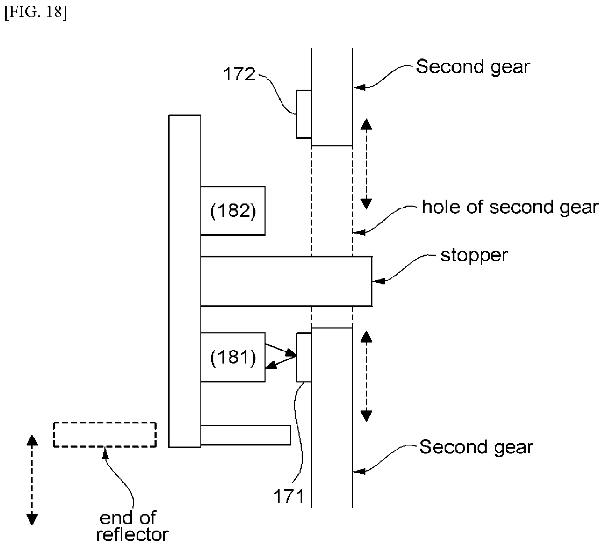

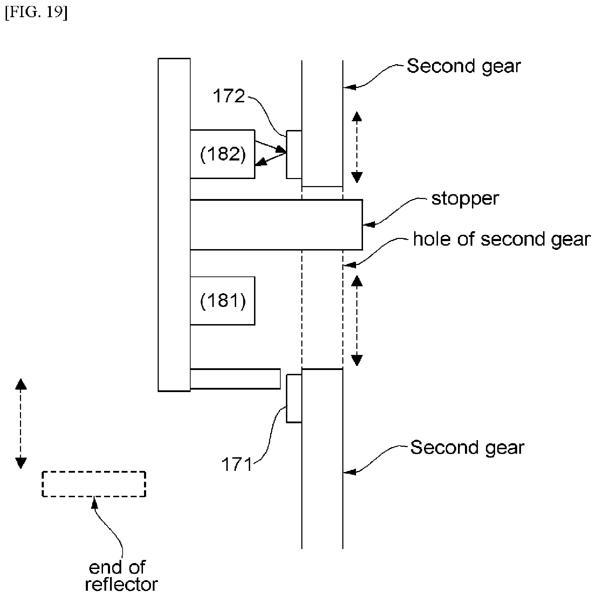

FIGS. 18 and 19 are diagrams illustrating cross-sections taken along line A-A' of FIG. 17.

When the first location indicator 171 installed at a lower end of the hole of the second gear 147 is located to be parallel to the first location sensor 181 while the second gear 147 continuously rotates in the first direction, the first location sensor 181 transmits a first control signal to the controller 160. When the second gear 147 rotates in the first direction, the reflector 142 connected to the second gear 147 moves in the first direction.

When the second location indicator 172 installed at an upper end of the hole of the second gear 147 is located to be parallel to the second location sensor 182 while the second gear 147 continuously rotates in the second direction, the second location sensor 182 transmits a second control signal to the controller 160. When the second gear 147 rotates in the second direction, the reflector 142 connected to the second gear 147 moves in the second direction.

The controller 160 stores a rotation angle of the first driving unit 144 corresponding to the location of the reflector 142 at a time point of the reception of the first control signal from the first location sensor 181. The controller 160 stores a rotation angle of the first driving unit 144 corresponding to the location of the reflector 142 at a time point of the reception of the second control signal from the second location sensor 182.

A fourth light blocking member may be installed in the location sensor 180 so that the light transceived by the location sensor 180 does not interfere with the light of the optical transmitter 110 or the light of the optical receiving receiver 120. The fourth light blocking member may be installed in a neighboring area of the location sensor 180 and may also be installed in each of the first location sensor 181 and the second location sensor 182.

The optical transceiver 100 adjusts the movement path and the angle of the light by using the moving reflector 142 and secures a vertical field of view, thereby measuring a pin point, unlike an existing device implemented with a single lens and a photodiode array. The optical transceiver acquires point cloud data.

As illustrated in FIGS. 9, 14, 20, and 21, the reflector may be implemented with a rectangular mirror, and various-shaped mirrors having appropriate sizes and shapes may be used according to an implemented design. The transmitter module and the receiver module may include fixed mirrors 114 and 124, respectively.

In the LIDAR sensor, the transmission path of light is formed as the first reflection region in the light transmitter, and the reception path of light is formed as the light receiver in the second reflection region. The first reflection region and the second reflection region move at predetermined angles when viewed in the same direction.

The light transmitter 110 and the light receiver 120 may include lens 113 and 123. When a single vision lens is used as the lens of the transmitter and the receiver, it may be difficult to completely adjust a focus. A general focal length lens and a lens tube ray may be mounted on an interface board.

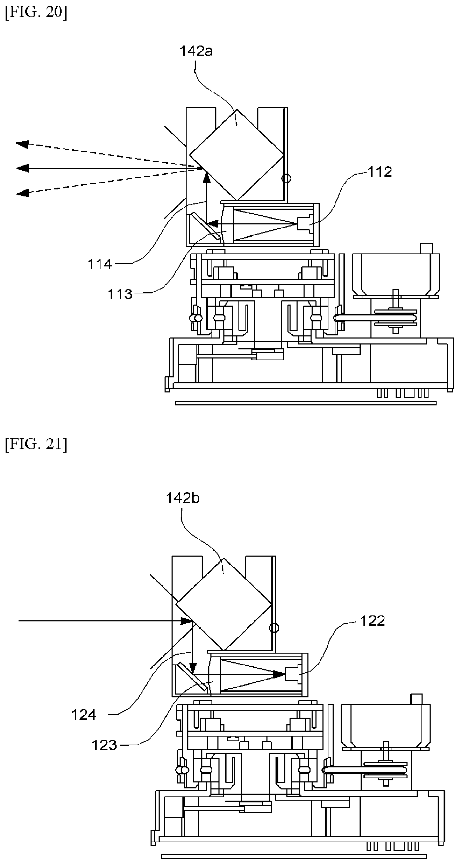

Referring to FIG. 20, the optical transceiver 100 may use the motor connected to the first gear and enable the first reflector 142a connected to the second gear to move. A beam output from the transmitter is steered by the first reflector 142a.

In FIG. 20, the transmission path of light may be formed as the light source 112 → the transmission lens 113 → the transmission reflector 114 → the first reflector 142a → the target object. The reception path of light may also be formed as the light source 112 → the first reflector 142a as necessary.

Referring to FIG. 21, the optical transceiver 100 may use the motor connected to the first gear, and enable the second reflector 142b connected to the second gear to move. A beam received from the target object is steered by the second reflector 142b.

In FIG. 21, the reception path of light may be formed as the target object → the second reflector 142b → the reception reflector 124 → the reception lens 123 → the photodiode 122. The reception path of light may also be formed as the second reflector 142b → the photodiode 122 as necessary.

The first reflector 142a and the second reflector 142b are connected to the second gear and synchronized with each other to move. The first reflector and the second reflector are connected while passing through the first light blocking member or crossing over the first light blocking member, and may also be integrally implemented.

The LIDAR sensor may measure a pin point in which an error due to the echo phenomenon is minimized and minimize a volume of the LIDAR sensor.

The 3D LIDAR sensor, that is, the optical transceiver includes the transmitter module, the receiver module, a rotating body, and a second driving unit. The transmitter module and the receiver module are connected to the rotating body. The second driving unit may transfer power to the rotating body through a cable, a chain, and the like, and may be implemented with a motor and the like. The second driving unit rotates the rotating body in a specific direction to rotate the transmitter module and the receiver module.

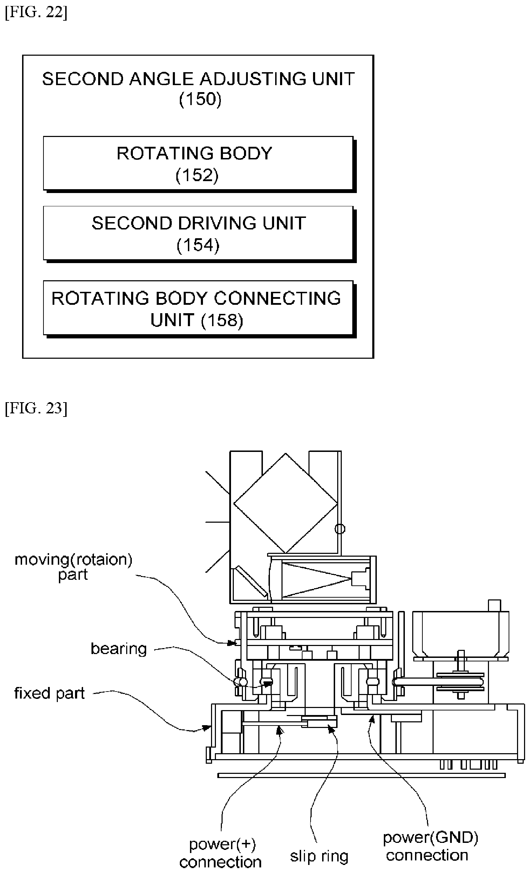

FIGS. 22 to 25 illustrate an example of the second angle adjusting unit of the optical transceiver.

The second angle adjusting unit 150 includes a rotating body 152 which is attached with the first angle adjusting unit 140 and rotates. The rotating body 152 is attached with the optical transmitter, the optical receiver, and the first light blocking member to rotate. The rotating body 152 may rotate by a specific angle in a third direction or a fourth direction by a bearing.

The second angle adjusting unit 150 includes a second driving unit 154 which is connected to the rotating body 152 and rotates the rotating body 152. The second driving unit 154 transfers power to the rotating body 152 of the second angle adjusting unit 150. The second driving unit 154 may be implemented by a general motor, a step motor, and the like. The second driving unit 154 may adjust a rotation direction, a rotation speed, or a rotation acceleration. The second driving unit 154 rotates in the third direction or the fourth direction. The third direction or the fourth direction may mean a left or right direction according to a horizontal field of view.

The second angle adjusting unit 150 includes a rotating body connecting unit connecting a base and the rotating body 152 of the optical transceiver 100. The rotating body connecting unit transfers power into the rotating body and communicates data.

The rotating body connecting unit 158 includes a data communication unit which is wirelessly connected with the rotating body inside the rotating body and transmits data.

The data communication unit is vulnerable to electric noise or surge emitted from a product or radiated noise generated in diode switching, so that the data communication unit is wirelessly connected. The data communication unit may adopt an infrared communication scheme in order to completely remove wires. An infrared transmitter and an infrared receiver are provided at the centers of the rotating body at the upper end and a base at the lower end, respectively, so that data may be bidirectionally transceived.

A second light blocking member may be installed in the data communication unit so that the data wirelessly transmitted in the data communication unit does not interfere with the light of the optical transmitter or the optical receiver. The second light blocking member helps a laser and infrared rays not to interfere with each other.

The rotating body connecting unit 158 includes a power transfer unit which transfers wireless power by using a coil inside the rotating body. The coil includes a first coil and a second coil. The first coil may transmit power and the second coil may receive power. An opposite case is available.

The first coil connected to the base of the optical transceiver and the second coil connected to the rotating body are isolated by a third light blocking member. The third light blocking member may be installed around a metal part, such as a bearing, and may be implemented by a ferrite shield. Transmission efficiency of the coil may be improved by the third light blocking member.

The distance measuring device adjusts a vertical scanning movement of the reflector of the first angle adjusting unit through the controller implemented by a Field Programmable Gate Array (FPGA), a processor, and the like. The controller transmits the control signal to the first driving unit and moves the reflector. Each of the controller adjusting the vertical scanning movement of the reflector and the controller adjusting the horizontal rotating movement of the rotating body may be implemented by an independent module.

The distance measuring unit receives a vertical angle from the controller adjusting the vertical scanning movement of the reflector, and receives a horizontal angle from the controller adjusting the horizontal rotating movement, and stores the vertical angle and the horizontal angle.

In the distance measuring device, the photodiode receives light emitted from the light source to calculate TOF. The distance measuring device transfers the vertical angle, the horizontal angle, and the TOF to a host through the interface. The TOF may be corrected or calibrated. The distance measuring device may perform filtering for removing noise on at least one of vertical angle, the horizontal angle, and the TOF and then transmit the data to the host.

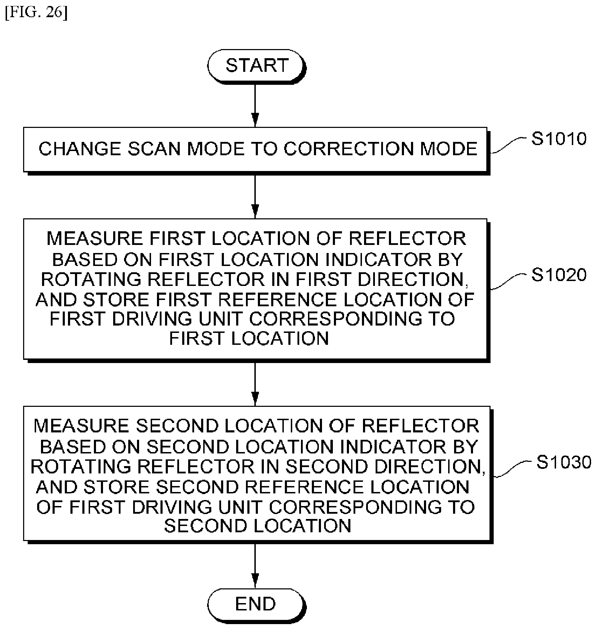

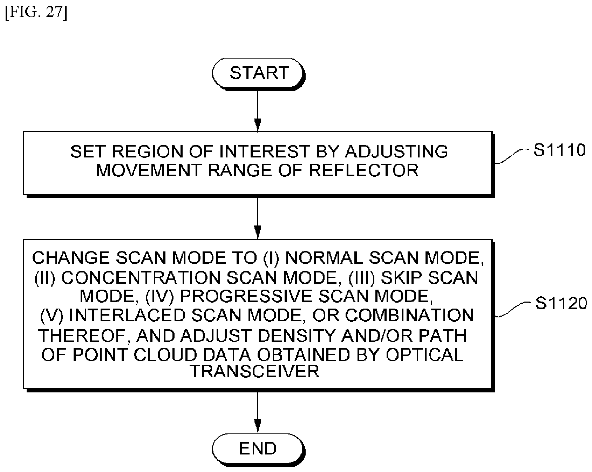

FIGS. 26 and 27 are flowcharts illustrating an example of an operation of the optical transceiver according to other exemplary embodiments of the present invention.

In operation S1010, the optical transceiver changes a scan mode to a correction mode. The optical transceiver performs the correction when a check is performed before a start of the scan or during the scan.

When the scan mode is changed to the correction mode, the optical transceiver rotates the reflector in the first direction and measures a first location of the reflector based on the first location indicator in operation S1020. The controller stores a first reference location of the first driving unit corresponding to the first location.

When the scan mode is changed to the correction mode, the optical transceiver rotates the reflector in the second direction and measures a second location of the reflector based on the second location indicator in operation S1030. The controller stores a second reference location of the first driving unit corresponding to the second location.

The controller transmits a signal controlling an operation of the first angle adjusting unit to the first angle adjusting unit or transmits a signal controlling an operation of the second angle adjusting unit to the second angle adjusting unit. The controller corrects the first reference location and the second reference location of the first driving unit in the correction mode.

When the number of times of shifting the direction of the motor is increased, the motor and the reflector may be misaligned. When only a rotation angle of the motor or a rotation angle of the reflector is measured in the misaligned state, the reflector may collide with the stopper. The optical transmitter periodically sets initial values of both ends of the motor corresponding to the locations of both ends of the reflector by measuring an actual location of the reflector by using the location indicator. This corresponds to a sort of fallback function.

The optical transceiver or the controller acquires point cloud data according to a time flow in the scan mode. It is necessary to increase the number of elements of valuable data in a situation where the sampling period is limited. In the case of a travelling application that finds a minimum cost path on a plane according to limitations, it is necessary to adjust an angle for acquiring a range of a plane object. The optical transceiver may easily change a pitching range of the reflector. For example, when a horizontal field of view is settable to - 45° to 0° from a predetermined reference angle, the scan is available in a partial angle range.

In operation S1110, the optical transceiver or the controller sets a region of interest for acquiring the point cloud data by adjusting a movement range of the first angle adjusting unit or the reflector. A scan available region is determined according to a range of a first angle of the reflector included in the first angle adjusting unit and the range of the second angle of the rotating body included in the second angle adjusting unit. The controller sets the region of interest corresponding to a part of the scan available region by adjusting the range of the first angle.

In operation S 1120, the optical transceiver or the controller changes a first angle of the reflector included in the first angle adjusting unit. The optical transceiver or the controller changes the scan mode to (i) a normal scan mode, (ii) a concentration scan mode, (iii) a skip scan mode, (iv) a progressive scan mode, (v) an interlaced scan mode, or a combination thereof and adjusts density and/or a path of the point cloud data acquired by the optical transceiver.

In the normal scan mode, the optical transceiver performs line-scan at every reference angle interval and acquires the point cloud data. In the first angle adjusting unit, the range of the first angle corresponding to the rotation angle of the first driving unit or the range of the second gear angle corresponding to the rotation angle of the reflector rotates at a reference angle interval.

In the concentration scan mode, the optical transceiver acquires the point cloud data at every angle interval narrower than the reference angle interval. In the first angle adjusting unit, the range of the first angle corresponding to the rotation angle of the first driving unit or the range of the second angle corresponding to the rotation angle of the reflector rotates at an angle interval narrower than the reference angle interval.

In the skip scan mode, the optical transceiver acquires the point cloud data at every angle interval wider than the reference angle interval or by skipping a specific angle range. In the first angle adjusting unit, the range of the first angle corresponding to the rotation angle of the first driving unit or the range of the second angle corresponding to the rotation angle of the reflector rotates at an angle interval wider than the reference angle interval or rotates by skipping the specific angle range.

If the normal scan mode, the concentration scan mode, and the skip scan mode are the mode related to the scan interval, the progressive scan mode and the interlaced scan mode are the modes related to a scan order.

In the progressive scan mode, the optical transceiver acquires the point cloud data by line-scanning a plurality of lines in order.

In the progressive scan mode, when N lines (N is a natural number) are scanned in the region of interest, the optical transceiver maintains a direction of the first angle of a movement of the reflector by sequentially increasing a line from the first line to the last line.

In the interlaced scan mode, the optical transceiver scans an intermediate line between the scanned lines and acquires the point cloud data.

In the interlaced scan mode, when N lines (N is a natural number) are scanned in the region of interest, the optical transceiver includes a section in which a direction of the first angle of a movement of the reflector is switched by scanning the K^{th} line, scanning the L^{th} line, and scanning the M^{th} line. K is a natural number smaller than N, L is a natural number larger than K and equal to or smaller than N, and M is a natural number smaller than N. K and M are different natural numbers. The optical transceiver is operated in a scheme of intermittently skipping a line and scanning a line which has not been scanned to fill the line.

In the interlaced scan mode, the controller sets a line which is line-scanned by the optical transceiver in the region of interest to B × P + Q. P is a line scan interval at t, B is a positive sign or a negative sign, and Q is a line that is line-scanned at t-1. P includes a value set to be larger or smaller than the interval at which the line scanning is performed at t-1 under a predetermined condition, and B is changed from a positive sign to a negative sign or a negative sign to a positive sign at specific t under a predetermined condition. Herein, the condition may be set with a predetermined turn, the last line of the region of interest, and the like.

For example, when the horizontal field of view is settable to - 45° to 0° from the predetermined reference angle, the horizontal field of view may be changed to 0° ---+ - 5° ---+ - 10° ---+ - 20° → - 25° → - 30° ---+ - 27.5° → - 22.5° → - 17.5° ---+ - 12.5° → - 7.5° → - 2.5° → ....

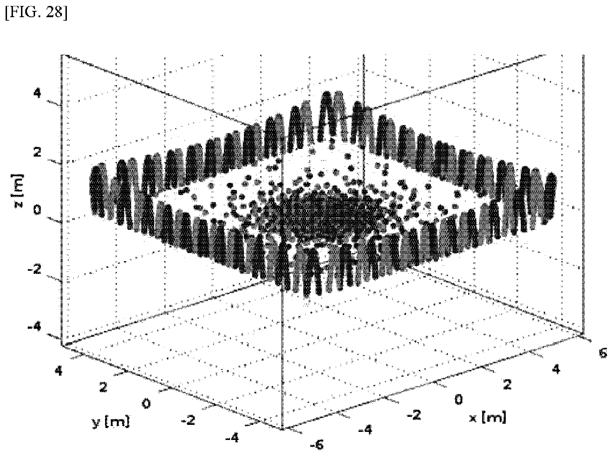

FIGS. 28 to 30 are diagrams illustrating an example of the point cloud data obtained by the optical transceiver according to other exemplary embodiments of the present invention.

A location unit of the 3D point cloud data illustrated in FIG. 28 is a meter. The distance measuring device may acquire point cloud data for a floor surface and a wall surface.

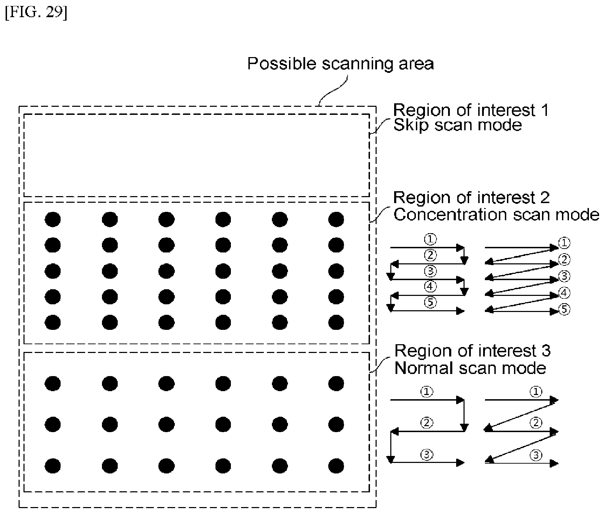

Referring to point cloud data illustrated in FIG. 29, the optical transceiver may adjust acquirement density of the point cloud data by using the first angle adjusting unit. The optical transceiver may acquire point cloud data with various densities for a predetermined time by setting region 1 of interest in the skip scan mode, setting region 2 of interest in the concentration scan mode, and setting region 3 of interest in the normal scan mode.

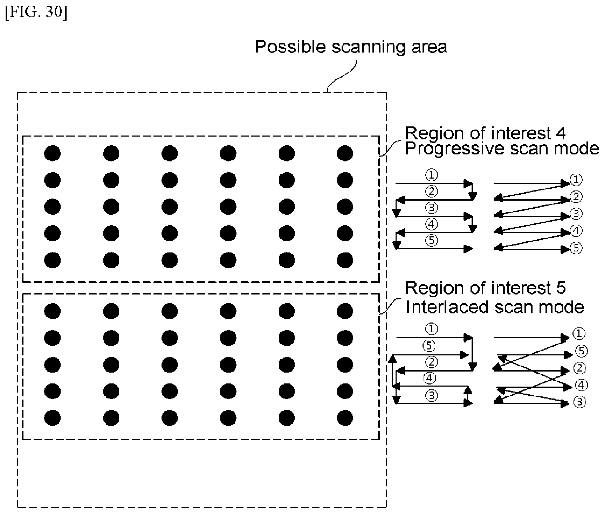

Referring to point cloud data illustrated in FIG. 30, the optical transceiver may adjust a path of the acquirement of the point cloud data by using the first angle adjusting unit. The optical transceiver may acquire point cloud data through various paths for a predetermined time by setting region 4 of interest in the progressive scan mode, and setting region 5 of interest in the interlaced scan mode.

The plurality of constituent elements included in the LIDAR sensor (optical transceiver) and the distance measuring device may be combined with one another to be implemented as at least one module. The constituent elements are connected to a communication path connecting a software module or a hardware module inside a device and organically operate with one another. The constituent elements communicate by using one or more communication buses or signal lines.

The distance measuring device and the distance measuring unit may be implemented within a logic circuit by hardware, firmware, software, or a combination thereof, and may also be implemented by using a general-purpose or specific-purpose computer. The device may be implemented by a hardwired device, a Field Programmable Gate Array (FPGA), an Application Specific Integrated Circuit (ASIC), and the like. Further, the device may be implemented by a System on Chip (SoC) including one or more processors and controllers.

The distance measuring device and the distance measuring unit may be mounted in a computing device equipped with hardware elements in the form of software, hardware, or a combination thereof. The computing device may mean various devices including the entirety or a part of a communication device, such as a communication modem, for performing communication with various devices or a wired/wireless communication network, a memory storing data for executing a program, and a microprocessor for executing a program and performing a calculation and giving a command.

The operation according to the present exemplary embodiments may be implemented in the form of a program command performable through various computer means and be recorded in a computer readable medium. The computer readable medium indicates a predetermined medium participating in providing a command to a processor for the execution. The computer readable medium may include a program command, a data file, a data structure, or a combination thereof. For example, the computer readable medium may include a magnetic medium, an optical recording medium, and a memory. A computer program may be distributed to computer systems connected through a network, so that a computer readable code may be stored and executed by a distribution method. Functional programs, codes, and code segments for implementing the present exemplary embodiment may be easily inferred by programmers ordinarily skilled in the technical field of the present exemplary embodiment.

## Claims

1. An optical transceiver (100), comprising:
a first angle adjusting unit (140) having a first reflection region (143a) and a second reflection region (143b);
an optical transmitter (110) configured to transmit light to the first reflection region (143a) of the first angle adjusting unit (140);
an optical receiver (120) configured to receive light from the second reflection region (143b) of the first angle adjusting unit (140);
a first light blocking member (130) configured to separate a movement path of the transmitted light and a movement path of the received light;
a second angle adjusting unit (150) configured to move the first angle adjusting unit (140); and
a controller (160) configured to transmit a signal controlling an operation of the first angle adjusting unit (140) to the first angle adjusting unit (140) and transmit a signal controlling an operation of the second angle adjusting unit (150) to the second angle adjusting unit (150), such that a scan available region may be determined according to a movement range of the first angle adjusting unit (140) and a movement range of the second angle adjusting unit (150)
wherein the first angle adjusting unit (140) includes a location sensor (180) installed in a frame of the optical transceiver (100),
**characterized in that**,
the first angle adjusting unit (140) includes a reflector (142) having the first reflection region (143a) and the second reflection region (143b), and a second gear (147) connected to the reflector (142), wherein
the location sensor (180) transceives light with a location indicator (170) attached to the reflector (142) of the first angle adjusting unit (140) and detects whether the reflector (142) is located at a predetermined location in a state where the second gear (147) of the first angle adjusting unit (140) is rotated, wherein the location sensor (180) includes a first location sensor (181) and a second location sensor (182) installed in a frame of the optical transceiver (100),
the location indicator (170) includes a first location indicator (171) and a second location indicator (172) installed in the reflector (142), wherein the first location sensor (181) transceives light with the first location indicator (171), and detects whether the reflector (142) is located at a predetermined first location in a state where the second gear (147) of the first angle adjusting unit (140) is rotated in a first direction, wherein the second location sensor (182) transceives light with the second location indicator (172), and detects whether the reflector (142) is located at a predetermined second location in a state where the second gear (147) of the first angle adjusting unit (140) is rotated in a second direction.

2. The optical transceiver (100) of claim 1, wherein when the optical transceiver (100) is changed from a scan mode to a correction mode,
the optical transceiver (100) measures a first location of the reflector (142) based on the first location indicator (171) by rotating the reflector (142) in the first direction and the controller (160) stores a first reference location of the first driving unit (144) corresponding to the first location,
the optical transceiver (100) measures a second location of the reflector (142) based on the second location indicator (172) by rotating the reflector (142) in the second direction and the controller (160) stores a second reference location of the first driving unit (144) corresponding to the second location, and
the controller (160) corrects the first reference location and the second reference location.

3. The optical transceiver (100) of claim 1, wherein a fourth light blocking member is installed in the location sensor (180) so that light transceived by the location sensor (180) does not interfere with light of the optical transmitter (110) or light of the optical receiver (120).

4. The optical transceiver (100) of claim 1, wherein the first angle adjusting unit (140) includes:
a first driving unit (144) configured to transfer power to the reflector (142);
a first gear (145) connected to the first driving unit (144) with the second gear (147) connected to the reflector (142) moving while being engaged with the first gear (145),
wherein the second angle adjusting unit (150) includes:
a rotating body (152), to which the first angle adjusting unit (140) is attached and which rotates;
a second driving unit (154) connected to the rotating body (152) to rotate the rotating body (152) ; and
a rotating body connecting unit (158) configured to connect a base and the rotating body (152) of the optical transceiver (100).

5. The optical transceiver (100) of claim 4, wherein the first driving unit (144) rotates in a first direction or a second direction within a range of a first gear angle set by the controller (160),
the first gear (145) connected to the first driving unit (144) rotates in the first direction or the second direction,
the second gear (147) engaged with the first gear (145) rotates in the first direction or the second direction, and
the reflector (142) connected with the second gear (147) moves within a range of a predetermined second gear angle.

6. The optical transceiver (100) of claim 4, wherein the second gear (147) includes a hole, and a stopper installed in a frame of the optical transceiver (100) crosses the arc-shaped hole.

7. The optical transceiver (100) of claim 4, further comprising:
an elastic body which is connected to the first gear (145) or the second gear (147) and is installed in a frame of the optical transceiver (100),
wherein the elastic body is relaxed or contracted to decrease backlash between the first gear (145) and the second gear (147).

8. The optical transceiver (100) of claim 4, wherein the rotating body connecting unit (158) includes a data communication unit which is wirelessly connected with the rotating body (152) inside the rotating body (152) and transmits data, and
a second light blocking member is installed in the data communication unit so that data wirelessly transmitted from the data communication unit does not interfere with light of the light transmitter or light of the light receiver.

9. The optical transceiver (100) of claim 4, wherein the rotating body connecting unit (158) includes a power transfer unit which wirelessly transfers power by using a first coil and a second coil inside the rotating body (152) , and
the first coil connected to the base of the optical transceiver (100) and the second coil connected to the rotating body (152) are isolated from a metal part by a third light blocking member.

10. A moving object (1), comprising:
a distance measuring device (10) configured to calculate a time of flight between the moving object (1) and a target object and measure a distance to the target object; and
a moving device (20) configured to move the moving object (1) based on the distance to the target object,
wherein the distance measuring device (10) includes:
an optical transceiver (100) according to claim 1.

## Patentansprüche

1. Optischer Sendeempfänger (100), umfassend:
eine erste Winkeleinstelleinheit (140), die eine erste Reflexionsregion (143a) und eine zweite Reflexionsregion (143b) aufweist;
einen optischen Sender (110), der konfiguriert ist, um Licht zu der ersten Reflexionsregion (143a) der ersten Winkeleinstelleinheit (140) zu senden;
einen optischen Empfänger (120), der konfiguriert ist, um Licht von der zweiten Reflexionsregion (143b) der ersten Winkeleinstelleinheit (140) zu empfangen;
ein erstes Lichtblockierelement (130), das konfiguriert ist, um eine Bewegungsbahn des gesendeten Lichts und eine Bewegungsbahn des empfangenen Lichts zu trennen;
eine zweite Winkeleinstelleinheit (150), die konfiguriert ist, um die erste Winkeleinstelleinheit (140) zu bewegen; und
eine Steuerung (160), die konfiguriert ist, um ein Signal, das einen Betrieb der ersten Winkeleinstelleinheit (140) steuert, an die erste Winkeleinstelleinheit (140) zu senden, und ein Signal, das einen Betrieb der zweiten Winkeleinstelleinheit (150) steuert, an die zweite Winkeleinstelleinheit (150) zu senden, derart, dass eine für einen Scan verfügbare Region gemäß einem Bewegungsbereich der ersten Winkeleinstelleinheit (140) und einem Bewegungsbereich der zweiten Winkeleinstelleinheit (150) bestimmt werden kann,
wobei die erste Winkeleinstelleinheit (140) einen Lagesensor (180) einschließt, der in einem Rahmen des optischen Sendeempfängers (100) installiert ist,
**dadurch gekennzeichnet, dass**
die erste Winkeleinstelleinheit (140) einen Reflektor (142), der die erste Reflexionsregion (143a) und die zweite Reflexionsregion (143b) aufweist, und ein zweites Zahnrad (147) einschließt, das mit dem Reflektor (142) verbunden ist, wobei der Lagesensor (180) Licht mit einem Lagekennzeichen (170) sendeempfängt, das an dem Reflektor (142) der ersten Winkeleinstelleinheit (140) angebracht ist, und erkennt, ob sich der Reflektor (142) an einer vorgegebenen Position befindet, in einem Zustand, in dem das zweite Zahnrad (147) der ersten Winkeleinstelleinheit (140) gedreht ist, wobei der Lagesensor (180) einen ersten Lagesensor (181) und einen zweiten Lagesensor (182) einschließt, die in einem Rahmen des optischen Sendeempfängers (100) installiert sind,
das Lagekennzeichen (170) ein erstes Lagekennzeichen (171) und ein zweites Lagekennzeichen (172) einschließt, die in dem Reflektor (142) installiert sind, wobei der erste Lagesensor (181) Licht mit dem ersten Lagekennzeichen (171) sendeempfängt und erkennt, ob sich der Reflektor (142) an einer vorbestimmten ersten Position befindet, in einem Zustand, in dem das zweite Zahnrad (147) der ersten Winkeleinstelleinheit (140) in eine erste Richtung gedreht wird, wobei der zweite Lagesensor (182) Licht mit dem zweiten Lagekennzeichen (172) sendeempfängt und erkennt, ob sich der Reflektor (142) an einer vorbestimmten zweiten Position befindet, in einem Zustand, in dem das zweite Zahnrad (147) der ersten Winkeleinstelleinheit (140) in eine zweite Richtung gedreht ist.

2. Optischer Sendeempfänger (100) nach Anspruch 1, wobei, wenn der optische Sendeempfänger (100) von einem Scanmodus in einen Korrekturmodus geändert wird,
der optische Sendeempfänger (100) eine erste Lage des Reflektors (142) basierend auf dem ersten Lagekennzeichen (171) durch Drehen des Reflektors (142) in die erste Richtung misst und die Steuerung (160) eine erste Referenzlage der ersten Antriebseinheit (144), die der ersten Lage entspricht, speichert,
der optische Sendeempfänger (100) eine zweite Lage des Reflektors (142) basierend auf dem zweiten Lagekennzeichen (172) durch Drehen des Reflektors (142) in die zweite Richtung misst und die Steuerung (160) eine zweite Referenzlage der ersten Antriebseinheit (144) speichert, die der zweiten Lage entspricht, und
die Steuerung (160) die erste Referenzlage und die zweite Referenzlage korrigiert.

3. Optischer Sendeempfänger (100) nach Anspruch 1, wobei ein viertes Lichtblockierelement in dem Lagesensor (180) installiert ist, sodass Licht, das durch den Lagesensor (180) sendeempfangen wird, Licht des optischen Senders (110) oder Licht des optischen Empfängers (120) nicht stört.

4. Optischer Sendeempfänger (100) nach Anspruch 1, wobei die erste Winkeleinstelleinheit (140) einschließt:
eine erste Antriebseinheit (144), die konfiguriert ist, um Leistung auf den Reflektor (142) zu übertragen;
ein erstes Zahnrad (145), das mit der ersten Antriebseinheit (144) verbunden ist, wobei sich das zweite Zahnrad (147), das mit dem Reflektor (142) verbunden ist, bewegt, während es mit dem ersten Zahnrad (145) in Eingriff steht,
wobei die zweite Winkeleinstelleinheit (150) einschließt:
einen Drehkörper (152), an dem die erste Winkeleinstelleinheit (140) angebracht ist und der sich dreht;
eine zweite Antriebseinheit (154), die mit dem Drehkörper (152) verbunden ist, um den Drehkörper (152) zu drehen; und
eine Drehkörperverbindungseinheit (158), die konfiguriert ist, um eine Basis und den Drehkörper (152) des optischen Sendeempfängers (100) zu verbinden.

5. Optischer Sendeempfänger (100) nach Anspruch 4, wobei sich die erste Antriebseinheit (144) in einer ersten Richtung oder einer zweiten Richtung innerhalb eines Bereichs eines Winkels des ersten Zahnrads dreht, der durch die Steuerung (160) festgelegt ist,
sich ein erstes Zahnrad (145), das mit der ersten Antriebseinheit (144) verbunden ist, in die erste Richtung oder die zweite Richtung dreht,
sich ein zweites Zahnrad (147), das mit dem ersten Zahnrad (145) in Eingriff steht, in die erste Richtung oder die zweite Richtung dreht, und
sich der Reflektor (142), der mit dem zweiten Zahnrad (147) verbunden ist, innerhalb eines Bereichs eines zuvor bestimmten Winkels des zweiten Zahnrads bewegt.

6. Optischer Sendeempfänger (100) nach Anspruch 4, wobei das zweite Zahnrad (147) ein Loch einschließt und ein Anschlag, der in einem Rahmen des optischen Sendeempfängers (100) installiert ist, das bogenförmige Loch kreuzt.

7. Optischer Sendeempfänger (100) nach Anspruch 4, ferner umfassend:
einen elastischen Körper, der mit dem ersten Zahnrad (145) oder dem zweiten Zahnrad (147) verbunden ist und in einem Rahmen des optischen Sendeempfängers (100) installiert ist,
wobei der elastische Körper entspannt oder zusammengezogen wird, um ein Spiel zwischen dem ersten Zahnrad (145) und dem zweiten Zahnrad (147) zu verringern.

8. Optischer Sendeempfänger (100) nach Anspruch 4, wobei die Drehkörperverbindungseinheit (158) eine Datenkommunikationseinheit einschließt, die mit dem Drehkörper (152) im Inneren des Drehkörpers (152) drahtlos verbunden ist und Daten sendet, und
ein zweites Lichtblockierelement in der Datenkommunikationseinheit installiert ist, sodass Daten, die von der Datenkommunikationseinheit drahtlos gesendet werden, Licht des Lichtsenders oder Licht des Lichtempfängers nicht stören.

9. Optischer Sendeempfänger (100) nach Anspruch 4, wobei die Drehkörperverbindungseinheit (158) eine Leistungsübertragungseinheit einschließt, die Leistung durch Verwenden einer ersten Spule und einer zweiten Spule im Inneren des Drehkörpers (152) überträgt, und
die erste Spule, die mit der Basis des optischen Sendeempfängers (100) verbunden ist, und die zweite Spule, die mit dem Drehkörper (152) verbunden ist, von einem Metallteil durch ein drittes Lichtblockierelement isoliert sind.

10. Sich bewegendes Objekt (1), umfassend:
eine Entfernungsmessvorrichtung (10), die konfiguriert ist, um eine Flugzeit zwischen dem sich bewegenden Objekt (1) und einem Zielobjekt zu berechnen und eine Entfernung zu dem Zielobjekt zu messen; und
eine sich bewegende Vorrichtung (20), die konfiguriert ist, um das sich bewegende Objekt (1) basierend auf der Entfernung zu dem Zielobjekt zu bewegen,
wobei die Entfernungsmessvorrichtung (10) einschließt:
einen optischen Sendeempfänger (100) nach Anspruch 1.

## Revendications

1. Émetteur-récepteur optique (100), comprenant :
une première unité de réglage d'angle (140) ayant une première région de réflexion (143a) et une seconde région de réflexion (143b) ;
un émetteur optique (110) configuré pour émettre de la lumière à la première région de réflexion (143a) de la première unité de réglage d'angle (140) ;
un récepteur optique (120) configuré pour recevoir de la lumière à partir de la seconde région de réflexion (143b) de la première unité de réglage d'angle (140) ;
un premier élément de blocage de lumière (130) configuré pour séparer un chemin de mouvement de la lumière émise et un chemin de mouvement de la lumière reçue ;
une seconde unité de réglage d'angle (150), configurée pour déplacer la première unité de réglage d'angle (140) ; et
un dispositif de commande (160) configuré pour émettre un signal commandant le fonctionnement de la première unité de réglage d'angle (140) à la première unité de réglage d'angle (140) et émettre un signal commandant le fonctionnement de la seconde unité de réglage d'angle (150) à la seconde unité de réglage d'angle (150), de sorte qu'une région disponible au balayage peut être déterminée selon une plage de mouvement de la première unité de réglage d'angle (140) et une plage de mouvement de la seconde unité de réglage d'angle (150)
dans lequel la première unité de réglage d'angle (140) comporte un capteur d'emplacement (180) installé dans un cadre de l'émetteur-récepteur optique (100),
**caractérisé en ce que,**
la première unité de réglage d'angle (140) comporte un réflecteur (142) ayant la première région de réflexion (143a) et la seconde région de réflexion (143b), et un second engrenage (147) relié au réflecteur (142), dans lequel le capteur d'emplacement (180) émet de la lumière avec un indicateur d'emplacement (170) fixé au réflecteur (142) de la première unité de réglage d'angle (140) et détecte si le réflecteur (142) est situé à un emplacement prédéterminé dans un état où le second engrenage (147) de la première unité de réglage d'angle (140) effectue une rotation, dans lequel le capteur d'emplacement (180) comporte un premier capteur d'emplacement (181) et un second capteur d'emplacement (182) installés dans un cadre de l'émetteur-récepteur optique (100),
l'indicateur d'emplacement (170) comporte un premier indicateur d'emplacement (171) et un second indicateur d' emplacement (172) installés dans le réflecteur (142), dans lequel le premier capteur d'emplacement (181) émet de la lumière avec le premier indicateur d'emplacement (171), et détecte si le réflecteur (142) est situé à un premier emplacement prédéterminé dans un état où le second engrenage (147) de la première unité de réglage d'angle (140) effectue une rotation dans une première direction, dans lequel le second capteur d'emplacement (182) émet de la lumière avec le second indicateur d'emplacement (172), et détecte si le réflecteur (142) est situé à un second emplacement prédéterminé dans un état où le second engrenage (147) de la première unité de réglage d'angle (140) effectue une rotation dans une seconde direction.

2. Émetteur-récepteur optique (100) selon la revendication 1, dans lequel lorsque l'émetteur-récepteur optique (100) passe d'un mode de balayage à un mode de correction,
l'émetteur-récepteur optique (100) mesure un premier emplacement du réflecteur (142) sur la base du premier indicateur d' emplacement (171) en effectuant une rotation du réflecteur (142) dans la première direction et le dispositif de commande (160) enregistre un premier emplacement de référence de la première unité d'entraînement (144) correspondant au premier emplacement,
l'émetteur-récepteur optique (100) mesure un second emplacement du réflecteur (142) sur la base du second indicateur d'emplacement (172) en effectuant une rotation du réflecteur (142) dans la seconde direction et le dispositif de commande (160) enregistre un second emplacement de référence de la première unité d'entraînement (144) correspondant au second emplacement, et
le dispositif de commande (160) corrige le premier emplacement de référence et le second emplacement de référence.

3. Émetteur-récepteur optique (100) selon la revendication 1, dans lequel un quatrième élément de blocage de lumière est installé dans le capteur d'emplacement (180) de sorte que la lumière émise par le capteur d'emplacement (180) n'interfère pas avec la lumière de l'émetteur optique (110) ou la lumière du récepteur optique (120).

4. Émetteur-récepteur optique (100) selon la revendication 1, dans lequel la première unité de réglage d'angle (140) comporte :
une première unité d'entraînement (144) configurée pour transférer la puissance au réflecteur (142) ;
un premier engrenage (145) relié à la première unité d'entraînement (144) avec le second engrenage (147) relié au réflecteur (142) se déplaçant tout en étant en prise avec le premier engrenage (145),
dans lequel la seconde unité de réglage d'angle (150) comporte :
un corps rotatif (152), auquel la première unité de réglage d'angle (140) est fixée et qui effectue une rotation ;
une seconde unité d'entraînement (154) reliée au corps rotatif (152) pour mettre en rotation le corps rotatif (152) ; et
une unité de connexion de corps rotatif (158) conçue pour relier une base et le corps rotatif (152) de l'émetteur-récepteur optique (100).

5. Émetteur-récepteur optique (100) selon la revendication 4, dans lequel la première unité d'entraînement (144) effectue une rotation dans une première direction ou une seconde direction dans une plage d'un premier angle d'engrenage défini par le dispositif de commande (160),
le premier engrenage (145) relié à la première unité d'entraînement (144) effectue une rotation dans la première direction ou la seconde direction,
le second engrenage (147) en prise avec le premier engrenage (145) effectue une rotation dans la première direction ou la seconde direction, et
le réflecteur (142) relié au second engrenage (147) se déplace dans une plage d'un second angle d'engrenage prédéterminé.

6. Émetteur-récepteur optique (100) selon la revendication 4, dans lequel le second engrenage (147) comporte un trou, et un bouchon installé dans un cadre de l'émetteur-récepteur optique (100) traverse le trou en forme d'arc.

7. Émetteur-récepteur optique (100) selon la revendication 4, comprenant en outre :
un corps élastique qui est relié au premier engrenage (145) ou au second engrenage (147) et est installé dans un cadre de l'émetteur-récepteur optique (100),
dans lequel le corps élastique est détendu ou contracté pour réduire le jeu entre le premier engrenage (145) et le second engrenage (147).

8. Émetteur-récepteur optique (100) selon la revendication 4, dans lequel l'unité de connexion de corps rotatif (158) comporte une unité de communication de données qui est connectée sans fil avec le corps rotatif (152) à l'intérieur du corps rotatif (152) et transmet des données, et
un deuxième élément de blocage de lumière est installé dans l'unité de communication de données afin que les données transmises sans fil depuis l'unité de communication de données n'interfèrent pas avec la lumière de l'émetteur de lumière ou la lumière du récepteur de lumière.

9. Émetteur-récepteur optique (100) selon la revendication 4, dans lequel l'unité de connexion de corps rotatif (158) comporte une unité de transfert de puissance qui transfère sans fil la puissance au moyen d'une première bobine et d'une seconde bobine à l'intérieur du corps rotatif (152), et
la première bobine reliée à la base de l'émetteur-récepteur optique (100) et la seconde bobine reliée au corps rotatif (152) sont isolées d'une pièce métallique par un troisième élément de blocage de lumière.

10. Objet mobile (1), comprenant :
un dispositif de mesure de distance (10) configuré pour calculer un temps de vol entre l'objet mobile (1) et un objet cible et mesurer une distance par rapport à l'objet cible ; et
un dispositif mobile (20) configuré pour déplacer l'objet mobile (1) sur la base de la distance par rapport à l'objet cible,
dans lequel le dispositif de mesure de distance (10) comporte :
un émetteur-récepteur optique (100) selon la revendication 1.
